# EUROPEAN PATENT APPLICATION

(11) **EP 4 292 722 A1**
(43) Date of publication of application: **20.12.2023**
(21) Application number: 22784444.6
(22) Date of filing: 15.03.2022
(51) Int. Cl.: B21C 37/08, B21D 5/01, B21D 39/20, G05B 19/418

(54) **ROUNDNESS PREDICTION METHOD FOR STEEL PIPE, ROUNDNESS CONTROL METHOD, MANUFACTURING METHOD, METHOD FOR GENERATING ROUNDNESS PREDICTION MODEL, AND ROUNDNESS PREDICTION DEVICE**

(30) Priority: 05.04.2021 JP 2021063902
(71) Applicant: JFE Steel Corporation, Tokyo 100-0011 (JP)
(72) Inventor: HORIE, Masayuki, Tokyo 100-0011 (JP); HINATA, Kosuke, Tokyo 100-0011 (JP); ISHIGURO, Motoki, Tokyo 100-0011 (JP); YAMAZAKI, Ryosuke, Tokyo 100-0011 (JP)
(74) Representative: Grünecker Patent- und Rechtsanwälte PartG mbB
(86) International application number: PCT/JP2022/011610
(87) International publication number: WO 2022/215459

(57) **Abstract**

A steel pipe out-of-roundness prediction method according to the present invention is a method of predicting out-of-roundness of a steel pipe after a pipe expanding step in a steel pipe manufacturing process including steps of a U-press step, an O-press step, and the pipe expanding step, the U-press step being a step of performing forming processing of a steel sheet to make the steel sheet into a formed body having a U-shaped cross section using a U-press tool, the O-press step being a step of performing forming processing of the formed body having the U-shaped cross section to form an open pipe, and the pipe expanding step being a step of performing forming processing by pipe expansion on a steel pipe obtained by joining ends of the open pipe in a width direction. The method includes a step of predicting the out-of-roundness information of the steel pipe after the pipe expanding step by using an out-of-roundness prediction model having been trained by machine learning, the out-of-roundness prediction model for which an input data is data including one or more operational parameters selected from the operational parameters of the U-press step and one or more operational parameters selected from the operational parameters of the O-press step, and an output data is out-of-roundness information of the steel pipe after the pipe expanding step.

## Description

### Field

The present invention relates to a steel pipe out-of-roundness prediction method, steel pipe out-of-roundness control method, steel pipe manufacturing method, steel pipe out-of-roundness prediction model generation method, and steel pipe out-of-roundness prediction device applicable to the steel pipe after pipe expanding step in a UOE steel pipe manufacturing process.

### Background

Techniques of manufacturing a steel pipe having a large diameter and a large thickness used for a line pipe and the like include a wide-spread technique of manufacturing a steel pipe (referred to as UOE steel pipe) obtained by press forming on a steel sheet having a predetermined length, width, and thickness into a U shape, press forming the sheet into an O shape and welding a butt portion to form the sheet into a steel pipe, and expanding the diameter of the steel pipe (referred to as pipe expansion) to improve out-of-roundness. In recent years, there is an increasing demand for providing, as a UOE steel pipe, a steel pipe using a thicker or a higher strength material, together with severer required accuracy for the out-of-roundness of a steel pipe.

In response to this, Patent Literature 1 describes a method of suppressing, in a manufacturing step of a UOE steel pipe including a C-press step (end bending step), a U-press step (U-bend step), and an O-press step (O-bend step), an occurrence of imperfect forming in the O-press step by appropriately selecting an end bending processing width (C-bend length) in the C-press step, a U-bend width in the U-press step, and a curvature radius of a U-bend shoulder portion of a U-press tool. The method described in Patent Literature 1 is supposed to be able to obtain an appropriate steel pipe shape when forming is performed under a predetermined range of conditions regardless of the thickness and quality of the material.

On the other hand, Patent Literature 2 describes a method of reducing the angularity of a steel pipe referred to as peaking to improve the out-of-roundness of the steel pipe by setting the ratio between the outer diameter of the die used in the pipe expanding step constituting the UOE steel pipe manufacturing process before diameter expansion and the product inner diameter of the steel pipe to be manufactured, to fall within a predetermined range. In addition, Patent Literature 3 describes a technique of setting a width of a U-press tool used in a U-press step to 70% or less of an outer diameter of a product for a steel pipe having predetermined strength and size. The method described in Patent Literature 3 is supposed to optimize the contact state between the O-press mold and the formed body in the O-press step and improve the out-of-roundness of the open pipe after the O-press step.

### Citation List

### Patent Literature

Patent Literature 1: JP 55-50916 A
Patent Literature 2: JP 4-71737 A
Patent Literature 3: JP 2004-141936 A

### Summary

### Technical Problem

However, the method described in Patent Literature 1 is insufficient in achieving the out-of-roundness required for the current UOE steel pipe, making it difficult to manufacture a UOE steel pipe having satisfactory out-of-roundness. In addition, the technique provides appropriate conditions as operational conditions of the C-press step and the U-press step, and is not supposed to predict the out-of-roundness of the steel pipe after the pipe expanding step as a product. On the other hand, with the method described in Patent Literature 2, it is difficult to achieve satisfactory out-of-roundness in terms of equipment strength of pipe expanding equipment for a thick and high-strength UOE steel pipe. Further, the UOE steel pipe manufacturing process includes a plurality of steps at least including steps such as a U-press step and an O-press step in addition to the pipe expanding step. However, the method described in Patent Literature 2 has no consideration of the impact of the operational conditions of the steps other than the pipe expanding step on the out-of-roundness of the steel pipe after the pipe expanding step. This makes it difficult to reliably improve the out-of-roundness of the steel pipe after the pipe expanding step.

In addition, Patent Literature 3 describes a case where the out-of-roundness of the open pipe after the O-press step is improved by adjusting the width of the U-press tool to a predetermined range, and suggests that the out-of-roundness after the O-press step changes depending on the relationship between the U-press step and the O-press step. However, since operational conditions of a plurality of manufacturing steps including a pipe expanding step will have an impact on out-of-roundness of the UOE steel pipe product, there is room for improvement in achieving more satisfactory out-of-roundness of the steel pipe. In addition, the method described in Patent Literature 3 does not predict the out-of-roundness of the steel pipe after the pipe expanding step.

The present invention has been made in the view of the above problems, and one object is to provide a steel pipe out-of-roundness prediction method and a steel pipe out-of-roundness prediction device capable of accurately predicting the out-of-roundness of a steel pipe after a pipe expanding step in a UOE steel pipe manufacturing process including a plurality of steps. Another object of the present invention is to provide a steel pipe out-of-roundness control method and a steel pipe manufacturing method capable of manufacturing a UOE steel pipe having satisfactory out-of-roundness. Still another object of the present invention is to provide a steel pipe out-of-roundness prediction model generation method capable of generating an out-of-roundness prediction model that accurately predicts the out-of-roundness of a steel pipe after a pipe expanding step in a UOE steel pipe manufacturing process including a plurality of steps. Solution to Problem

To solve the problem and achieve the object, a steel pipe out-of-roundness prediction method according to the present invention is a method of predicting out-of-roundness of a steel pipe after a pipe expanding step in a steel pipe manufacturing process including steps of a U-press step, an O-press step, and the pipe expanding step, the U-press step being a step of performing forming processing of a steel sheet to make the steel sheet into a formed body having a U-shaped cross section using a U-press tool, the O-press step being a step of performing forming processing of the formed body having the U-shaped cross section to form an open pipe, and the pipe expanding step being a step of performing forming processing by pipe expansion on a steel pipe obtained by joining ends of the open pipe in a width direction. The method includes: a step of predicting out-of-roundness information of the steel pipe after the pipe expanding step by using an out-of-roundness prediction model having been trained by machine learning, the out-of-roundness prediction model for which an input data is data including one or more operational parameters selected from the operational parameters of the U-press step and one or more operational parameters selected from the operational parameters of the O-press step, and an output data is out-of-roundness information of the steel pipe after the pipe expanding step.

Moreover, in the steel pipe out-of-roundness prediction method according to the present invention, the out-of-roundness prediction model includes, as the input data, one or more parameters selected from attribute information of the steel sheet.

Moreover, in the steel pipe out-of-roundness prediction method according to the present invention, the out-of-roundness prediction model includes, as the input data, one or more operational parameters selected from the operational parameters of the pipe expanding step.

Moreover, in the steel pipe out-of-roundness prediction method according to the present invention, the steel pipe manufacturing process includes a C-press step of performing forming processing of an end of the steel sheet in a width direction using end bending prior to the U-press step, and the out-of-roundness prediction model includes, as the input data, one or more operational parameters selected from operational parameters of the C-press step.

Moreover, in the steel pipe out-of-roundness prediction method according to the present invention, the operational parameters of the U-press step include one or more operational parameters out of shape information of the U-press tool, a U-press depression amount, a U-press support initial interval, and a U-press support final interval.

Moreover, a steel pipe out-of-roundness control method according to the present invention includes a reconfiguring step of predicting out-of-roundness information of the steel pipe after the pipe expanding step using the steel pipe out-of-roundness prediction method according to the present invention, the prediction being performed before starting a reconfiguration target step which is selected from a plurality of forming processing steps constituting the steel pipe manufacturing process, and reconfiguring one or more operational parameters selected from at least operational parameters of the reconfiguration target step or one or more operational parameters selected from operational parameters of a forming processing step on a downstream side of the reconfiguration target step, based on the predicted out-of-roundness information of the steel pipe.

Moreover, a steel pipe manufacturing method according to the present invention includes a step of manufacturing a steel pipe using the steel pipe out-of-roundness control method according to the present invention.

Moreover, a steel pipe out-of-roundness prediction model generation method according to the present invention is a method of generating a steel pipe out-of-roundness prediction model that predicts out-of-roundness of a steel pipe after a pipe expanding step in a steel pipe manufacturing process including steps of a U-press step, an O-press step, and the pipe expanding step, the U-press step being a step of performing forming processing of a steel sheet to make the steel sheet into a formed body having a U-shaped cross section using a U-press tool, the O-press step being a step of performing forming processing of the formed body having the U-shaped cross section to form an open pipe, and the pipe expanding step being a step of performing forming processing by pipe expansion on a steel pipe obtained by joining ends of the open pipe in a width direction. The method includes an out-of-roundness prediction model generating step of acquiring a plurality of pieces of training data, in which one or more pieces of operational performance data selected from the operational performance data of the U-press step and one or more pieces of operational performance data selected from the operational performance data of the O-press step are input performance data, and performance data of the out-of-roundness of the steel pipe after the pipe expanding step corresponding to the input performance data is output performance data, and generating an out-of-roundness prediction model by machine learning using the acquired plurality of pieces of training data.

Moreover, in the steel pipe out-of-roundness prediction model generation method according to the present invention, the out-of-roundness prediction model includes, as the input performance data, one or more pieces of performance data selected from attribute information of the steel sheet.

Moreover, in the steel pipe out-of-roundness prediction model generation method according to the present invention, the machine learning to be used is a type of machine learning selected from a neural network, decision tree learning, random forest, Gaussian process regression, and support vector regression.

Moreover, a steel pipe out-of-roundness prediction device according to the present invention is a device of predicting a steel pipe out-of-roundness after a pipe expanding step in a steel pipe manufacturing process including a U-press step, an O-press step, and the pipe expanding step, the U-press step being a step of processing a steel sheet into a formed body having a U-shaped cross section using a U-press tool, the O-press step being a step of processing the formed body having the U-shaped cross section into an open pipe, and the pipe expanding step being a step of performing forming processing by pipe expansion on a steel pipe obtained by joining ends of the open pipe in a width direction. The steel pipe out-of-roundness prediction device includes: an operational parameter acquisition unit that acquires one or more operational parameters selected from the operational parameters of the U-press step and one or more operational parameters selected from the operational parameters of the O-press step; and an out-of-roundness prediction unit that predicts out-of-roundness information of the steel pipe after the pipe expanding step by inputting the operational parameter acquired by the operational parameter acquisition unit to an out-of-roundness prediction model having been trained by machine learning, the out-of-roundness prediction model for which an input data is data including one or more operational parameters selected from the operational parameters of the U-press step and one or more operational parameters selected from the operational parameters of the O-press step, and an output data is out-of-roundness information of the steel pipe after the pipe expanding step.

Moreover, the steel pipe out-of-roundness prediction device according to the present invention further includes a terminal device including an input unit that acquires input information based on a user's operation, and a display unit that displays the out-of-roundness information, wherein the operational parameter acquisition unit updates a part or all of the acquired operational parameters based on the input information acquired by the input unit, and the display unit displays the out-of-roundness information of the steel pipe which is predicted by the out-of-roundness prediction unit by using the updated operational parameters.

### Advantageous Effects of Invention

According to the steel pipe out-of-roundness prediction method and the steel pipe out-of-roundness prediction device of the present invention, it is possible to accurately predict the out-of-roundness of the steel pipe after the pipe expanding step in the UOE steel pipe manufacturing process including a plurality of steps. In addition, according to the steel pipe out-of-roundness control method and steel pipe manufacturing method according to the present invention, it is possible to manufacture a UOE steel pipe having satisfactory out-of-roundness. Furthermore, according to the steel pipe out-of-roundness prediction model generation method of the present invention, it is possible to generate a steel pipe out-of-roundness prediction model that accurately predicts the out-of-roundness of a steel pipe after a pipe expanding step in the UOE steel pipe manufacturing process including a plurality of steps.

### Brief Description of Drawings

FIG. 1 is a diagram illustrating a steel pipe manufacturing process according to an embodiment of the present invention.
FIG. 2 is a perspective view illustrating an overall configuration of a C-press device.
FIG. 3 is a schematic diagram illustrating a configuration of a press mechanism illustrated in FIG. 2.
FIG. 4 is a schematic diagram illustrating an overall configuration of a U-press device.
FIG. 5 is a schematic diagram illustrating an operation of the U-press device.
FIG. 6 is a schematic diagram illustrating a modification of the U-press device.
FIG. 7 is a schematic diagram illustrating an O-press step.
FIG. 8 is a schematic diagram illustrating a configuration example of a pipe expanding device.
FIG. 9 is a diagram illustrating a method of measuring an outer diameter shape of a steel pipe.
FIG. 10 is a diagram illustrating an out-of-roundness prediction model generation method according to an embodiment of the present invention.
FIG. 11 is a diagram illustrating an example of a relationship between a pipe thickness and a pipe expanding capability for each yield stress of a steel pipe.
FIG. 12 is a diagram illustrating an example of a relationship between a pipe thickness and a pipe expanding capability for each outer diameter of a steel pipe.
FIG. 13 is a diagram illustrating a measurement example of a cross-sectional shape of a steel pipe before a pipe expanding step.
FIG. 14 is a diagram illustrating a relationship between a pipe expansion rate and peaking at three protrusions illustrated in FIG. 13.
FIG. 15 is a diagram illustrating definition of peaking.
FIG. 16 is a diagram illustrating the shape of a U-press tool.
FIG. 17 is a diagram illustrating a steel pipe out-of-roundness control method according to an embodiment of the present invention.
FIG. 18 is a diagram illustrating a configuration of a steel pipe out-of-roundness prediction device according to an embodiment of the present invention.

### Description of Embodiments

Hereinafter, a steel pipe out-of-roundness prediction method, a steel pipe out-of-roundness control method, a steel pipe manufacturing method, a steel pipe out-of-roundness prediction model generation method, and a steel pipe out-of-roundness prediction device according to an embodiment of the present invention will be described with reference to the drawings.

### [Steel pipe manufacturing process]

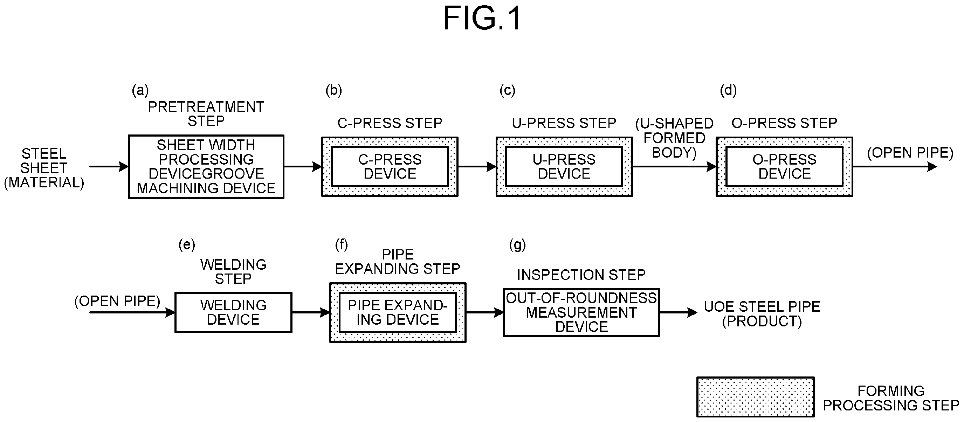

First, a steel pipe manufacturing process according to an embodiment of the present invention will be described with reference to FIG. 1.

FIG. 1 is a diagram illustrating a steel pipe manufacturing process according to an embodiment of the present invention. The steel pipe manufacturing process according to an embodiment of the present invention uses a thick steel sheet manufactured by a thick sheet rolling step which is a preprocessing step of the steel pipe manufacturing process, as a steel sheet to be a material. The thick steel sheet typically has a yield stress of 245 to 1050 MPa, a tensile strength of 415 to 1145 MPa, thickness of 6.4 mm to 50.8 mm, width of 1200 mm to 4500 mm, and a length of 10 m to 18 m.

As illustrated in FIG. 1(a), a steel sheet to be a material is first subjected to machining in a pretreatment step. Specifically, in order to adjust the width of the steel sheet within a predetermined range, the end of the steel sheet in the width direction is cut off or shaved by a sheet width processing device. This allows the outer diameter of the steel pipe after being formed into the UOE steel pipe to fall within the range required as a product. In addition, the end in the width direction of the steel sheet is cut or fused in advance into a chamfered shape referred to as a groove by a groove machining device. This procedure is for ensuring the strength of the welded portion by facilitating the molten metal to flow in the pipe thickness direction of the welded portion in the subsequent welding step.

Subsequently, as illustrated in FIG. 1(b), end bending processing (also referred to as crimping processing) of a steel sheet using a C-press device may be performed as the C-press step. By applying bending deformation to the end of the steel sheet in the width direction beforehand by a mold, it is possible to improve the out-of-roundness of the steel pipe after the pipe expanding step. Next step is a U-press step, as illustrated in FIG. 1(c), which performs forming processing of a steel sheet into a U-shaped formed body (formed body having a U-shaped cross section) using a U-press device. Subsequently, as illustrated in FIG. 1(d), the U-shaped formed body is formed into an open pipe having a substantially tubular cross section with the seam gap reduced by an O-press step using an O-press device.

The subsequent welding step in FIG. 1(e) is a step of restraining the seam gap portion formed at the end of the open pipe so as to allow the ends in the width direction to be in contact with each other, and joining the ends in the width direction to each other by a welding device. With this step, the open pipe is formed into a steel pipe having the ends in the width direction joined to each other. The subsequent pipe expanding step illustrated in FIG. 1(f) is a step of using a pipe expanding device including a plurality of pipe expanding tools each having a curved surface obtained by dividing an arc into a plurality of portions to expand the steel pipe by bringing the curved surface of the pipe expanding tool into contact with the inner surface of the steel pipe. The steel pipe manufactured in this manner is subjected to the determination in the inspection step illustrated in FIG. 1(g) as to whether the quality such as the material property, the appearance, and the dimension satisfies a predetermined specification, and then shipped as a UOE steel pipe (product). In the present embodiment, the inspection step includes an out-of-roundness measurement step of measuring the out-of-roundness of the steel pipe using an out-of-roundness measurement device.

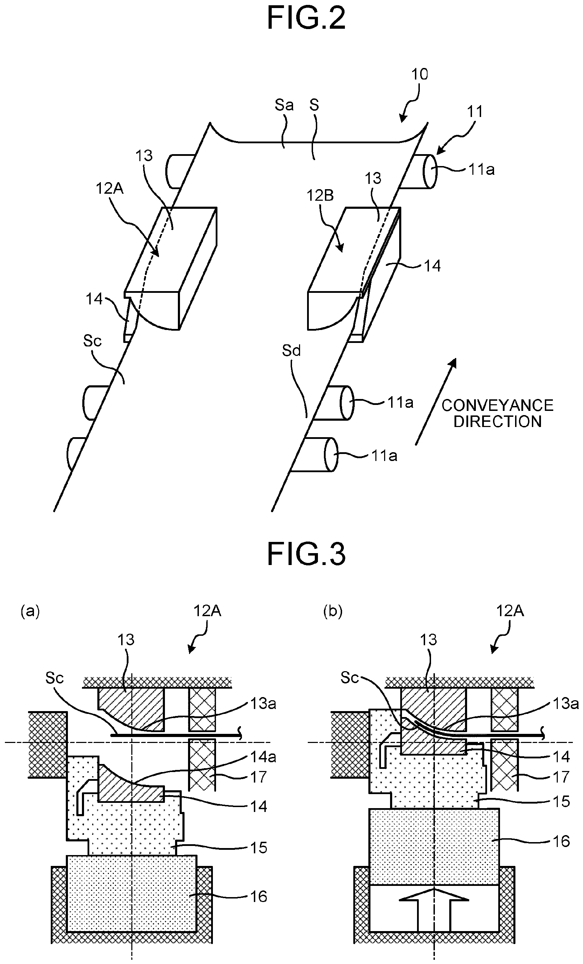

In the present embodiment, the C-press step, the U-press step, the O-press step, and a pipe expanding step, among a series of manufacturing steps including formation of a steel sheet into an open pipe and a pipe expanding step performed after welding, are referred to as "forming processing step". These steps are common steps of controlling the dimensions and shape of the steel pipe by applying plastic deformation to the steel sheet. Hereinafter, individual steps included in the steel pipe manufacturing process will be described in detail with reference to FIGS. 2 to 9.

### (C-press step)

First, with reference to FIGS. 2 and 3, a case where end bending processing of a steel sheet using a C-press device is performed as the C-press step will be described.

FIG. 2 is a perspective view illustrating an overall configuration of the C-press device. As illustrated in FIG. 2, the C-press device 10 includes: a conveyance mechanism 11 that conveys a steel sheet S in a direction along the longitudinal direction as a conveyance direction; a press mechanism 12A that performs bending processing on one width direction end Sc of the sheet to a predetermined curvature with the downstream side of the steel sheet S in the conveyance direction as a front side; a press mechanism 12B that performs bending processing on the other end Sd in the width direction to a predetermined curvature; and an interval adjustment mechanism (not illustrated) that adjusts the interval between the press mechanisms 12A and 12B on left and right according to the width of the steel sheet S subjected to end bending processing. The conveyance mechanism 11 includes a plurality of rotationally driven conveyance rolls 11a each disposed in front of and behind the press mechanisms 12A and 12B. Note that a reference sign Sa in the drawing indicates a leading end (front end in the longitudinal direction) of the steel sheet S.

FIG. 3(a) illustrates a cross section in the width direction of the press mechanism 12A that conducts bending processing on the one end Sc in the width direction of the steel sheet S as viewed in the direction from the upstream side to the downstream side in the conveyance direction of the steel sheet S. The press mechanism 12A and the press mechanism 12B are bilaterally symmetrical and have an identical configuration. The press mechanisms 12A/12B include an upper mold 13 and a lower mold 14 as a pair of molds arranged to face each other in the vertical direction, and a hydraulic cylinder 16 as a mold moving means that pushes up the lower mold 14 together with a tool holder 15 (moves in a direction approaching the upper mold 13) and clamps the molds with a predetermined pressing force. The press mechanisms 12A and 12B may include a clamp mechanism 17 that grips the steel sheet S on the inner side of the upper mold 13 and the lower mold 14 in the width direction. The length of the steel sheet S in the longitudinal direction of the upper mold 13 and the lower mold 14 is normally shorter than the length of the steel sheet S. In this case, the end bending processing is performed a plurality of times while intermittently feeding the steel sheet S in the longitudinal direction by the conveyance mechanism 11 (refer to FIG. 2).

In the C-press step, the lower mold 14 in contact with a surface on the outer side in the bending direction of the ends Sc and Sd in the width direction of the steel sheet S subjected to the end bending processing has a pressing surface 14a facing the upper mold 13. The upper mold 13 has a forming surface 13a having a convex curved surface facing the pressing surface 14a and having a curvature radius corresponding to the inner diameter of the steel pipe to be manufactured. The pressing surface 14a has a concave curved surface shape approaching the upper mold 13 toward the outside in the width direction. However, although the pressing surface 14a of the lower mold 14 has a concave curved surface shape, the pressing surface may be any surface that approaches the upper mold 13 as it goes outward in the width direction, and may be an inclined plane. The curved surface shape of the upper mold 13 and the lower mold 14 is appropriately designed according to the thickness, the outer diameter, and the like of the steel sheet S, and may be appropriately selected and used according to the target material.

FIG. 3(b) is a cross section of the press mechanism 12A in the width direction at the same position as FIG. 3(a), illustrating a state in which the lower mold 14 is pushed up by the hydraulic cylinder 16 and clamped. The lower mold 14 is pushed up by the hydraulic cylinder 16, and the end Sc of the steel sheet S in the width direction has been subjected to bending processing so as to be formed into a shape along the arc-shaped forming surface 13a of the upper mold 13. The width to be subjected to end bending (end bending processing width) varies depending on the width of the steel sheet S, and is generally about 100 to 400 mm.

### (U-press step)

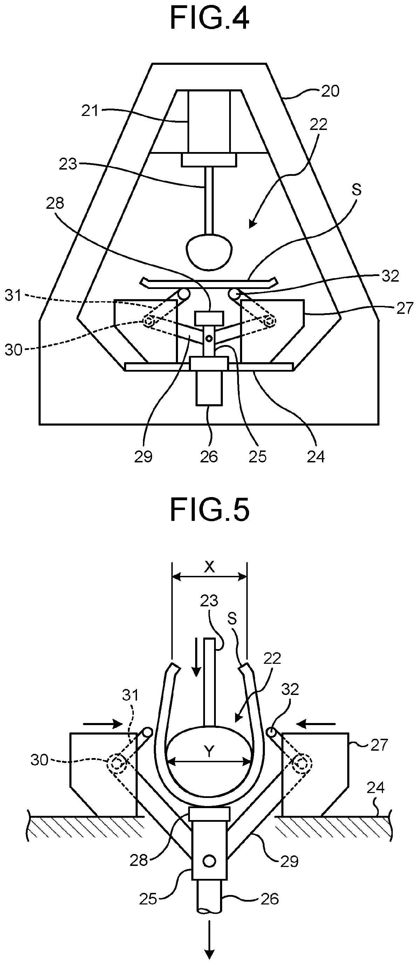

Next, a U-press step will be described with reference to FIGS. 4 to 6.

FIG. 4 illustrates an overall configuration of a U-press device for executing a U-press step. There are various U-press devices, and a typical example of which is illustrated. In the U-press device illustrated in FIG. 4, a lifting cylinder 21 is attached to an upper portion of a machine frame 20 with an upper rod facing downward, and an upper end of a hanging member 23 that supports a U-press tool (U punch) 22 is attached to the upper rod of the lifting cylinder 21. In addition, a sliding cylinder 26 is installed in a central portion of a lower floor surface 24 of the machine frame 20 such that a rod 25 faces the inside of the machine frame 20, and a sliding block 27, provided as a left-right pair, is installed on the side of the sliding cylinder 26. There is a saddle (pedestal) 28 attached to the head of the rod 25 of the sliding cylinder 26. The rod 25 and the sliding block 27 are coupled by a link 29. The link 29 has a pivot center 30 fixed to the sliding block 27, and a brake roll (U-bend support portion) 32 that pushes and bends the steel sheet S is attached to the distal end of an arm 31 extending from the pivot center 30. The steel sheet S to be a material in the U-press step is a steel sheet subjected to end bending processing in the C-press step. Alternatively, it is also allowable to use a steel sheet that is not subjected to end bending processing in the C-press step. The steel sheet S is installed on the left and right brake rolls 32 such that the left/right direction of the U-press device illustrated in FIG. 4 matches the width direction of the steel sheet S. At this time, the steel sheet S is installed substantially symmetrically with respect to the center point between the left and right brake rolls 32. Thereafter, when the U-press tool 22 is lowered by the lifting cylinder 21, deformation by three-point bending is imparted to the steel sheet S between the U-press tool 22 and the left and right brake rolls 32, leading to application of bending deformation of a downward convex shape to the steel sheet S.

FIG. 5 illustrates a state in which the U-press tool 22 is lowered to a preset lowest position by the lifting cylinder 21. When the U-press tool 22 is lowered by the lifting cylinder 21, the steel sheet S comes in contact with the saddle 28, causing the rod 25 to be lowered by the saddle 28. At this time, the link 29 is closed, the sliding block 27 moves to the center side of the machine frame 20, which simultaneously raises the arm 31, causing the left and right brake rolls 32 to move in a direction of closing the interval between individual rolls. With this operation, the brake roll 32 approaches from the side surface side of the steel sheet S formed in a U shape, and the steel sheet S is processed into a U-shaped formed body.

When executing the U-press step, in order to obtain a predetermined shape of the U-shaped formed body, a shape appropriate as the distal end shape of the U-press tool 22 (shape in a range in contact with the steel sheet S) is selected according to the thickness and steel type of the steel sheet S and the target outer diameter of the steel pipe. In addition, the greater the U-press depression amount of the U-press tool 22 (the pushing amount from the position in contact with the upper surface of the steel sheet S of the U-press tool 22 to the lowest position), the greater the winding angle of the steel sheet S with respect to the U-press tool 22, bringing the shape of the region of the U-shaped formed body in contact with the U-press tool 22 to closer to the shape of the distal end of the U-press tool 22. On the other hand, the interval (U-press support initial interval) between the left and right brake rolls 32 can be set by changing the position of the sliding block 27 before the start of the U-press step. This changes the distance between fulcrums when performing bending processing on the steel sheet S by three-point bending, leading to a change in the bending curvature applied to the steel sheet S. Furthermore, adjusting the height of the saddle 28 or the length of the rod 25 will change the height position at which the steel sheet S comes in contact with the saddle 28 during the processing of the U-press tool 22. This changes an open/close position of the link 29, leading to a change in the position of the brake roll 32 being formed and the interval (U-press support final interval) between the left and right brake rolls 32 in a state where the U-press tool 22 reaches the lowest position. This will change the opening amount of the aperture of the U-shaped formed body. Therefore, when the U-press step is executed, these operational parameters are appropriately set according to the thickness of the steel sheet S, the steel type, and the target outer diameter of the steel pipe.

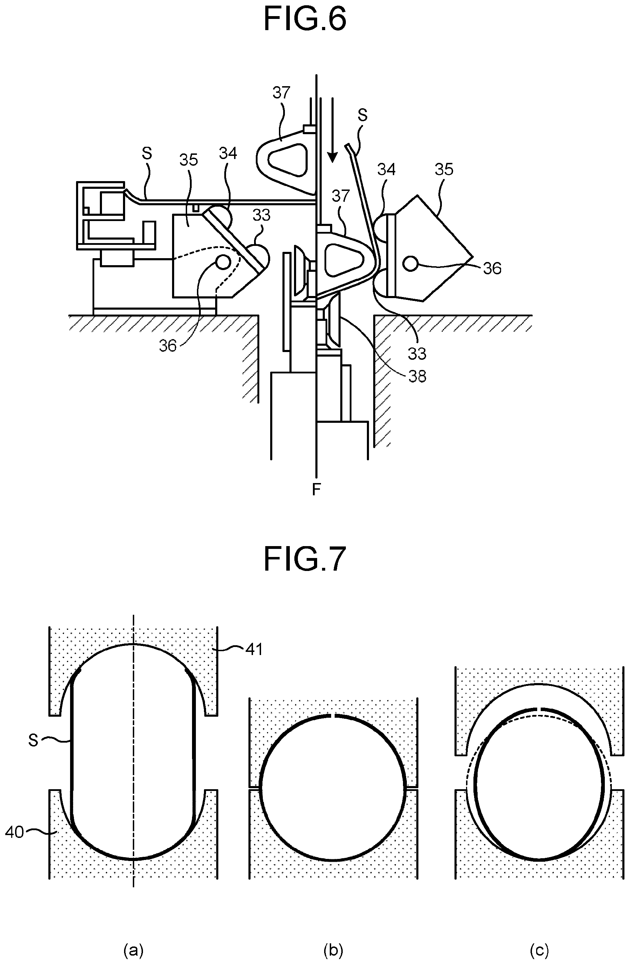

The U-press device illustrated in FIGS. 4 and 5 uses a system in which the brake rolls 32 move in a direction of closing the interval therebetween by the link 29, and is referred to as a Kaiser type U-press device. On the other hand, some U-press devices are referred to as a Verson type U-press device illustrated in FIG. 6. This uses a configuration in which a saddle portion 33 and a U-bend support portion 34 in FIG. 6 are responsible for the functions of the saddle 28 and the brake roll 32 in the Kaiser type U-press device illustrated in FIGS. 4 and 5, respectively, with the saddle portion 33 and the U-bend support portion 34 provided in a lower die (locker die) 35 which is an integrated member. In the Verson type U-press device, the left and right locker dies 35 rotate about a rotation fulcrum 36. When a U-press tool 37 pushes down the steel sheet S, the saddle portion 33 is pressed down, thereby rotating the left and right locker dies 35, causing the left and right U-bend support portions 34 to move so as to close the interval. With this operation, the steel sheet S is formed to have a U-shaped cross section. The item with a reference numeral 38 in FIG. 6 is a member referred to as a cushion, and is used to suppress sudden lowering of the steel sheet S during forming or used to raise the U-shaped formed body after the forming. In addition, the U-press device illustrated in FIG. 6 has a bilaterally symmetrical structure. A diagram illustrated on the left side of a symmetry plane F is a state in which the steel sheet S is installed in the U-press device, and a diagram illustrated on the right side of the symmetry plane F illustrates a state in which the U-press tool 37 is lowered to a preset lowest position.

Also in the U-press step using the Verson type U-press device illustrated in FIG. 6, the distal end shape of the U-press tool 37 is selected according to the thickness and steel type of the steel sheet S and the target outer diameter of the steel pipe, and the U-press depression amount is set. On the other hand, a U-press support initial interval can be set by changing the setting positions of the left and right locker dies 35. Further, the U-press support final interval can be changed by setting an initial height of the saddle portion 33 (or an initial angle of the locker die 35). Consequently, in the U-press step, the operational conditions of the U-press step can be specified by similar operational parameters regardless of which U-press device is used.

### (O-press step)

Next, the O-press step will be described with reference to FIG. 7.

The O-press step is performed by incorporating a semicircular die in an O-press device. FIG. 7 schematically illustrates a state in which a U-shaped formed body is deformed in the O-press step. In the O-press step, first, the U-shaped formed body is loaded on a lower die 40 of the O-press device. Next, when an upper die 41, which is a semicircular die open on the lower side is, lowered, an initial state before processing of the O-press step illustrated in FIG. 7(a) is obtained. Subsequently, when the upper die 41 is lowered by a die lifting device (not illustrated), the U-shaped formed body becomes a cylindrical shape having a substantially circular cross section along the upper and lower dies as illustrated in FIG. 7(b). Thereafter, when the upper die 41 is raised to release the restraint on the U-shaped formed body by the die, the U-shaped formed body undergoes elastic recovery so as to return from a substantially circular state illustrated in FIG. 7(b) to a slightly U-shaped shape by spring back. As a result, the shape of the U-shaped formed body after completion of the O-press step becomes a slightly vertically long elliptical shape as illustrated in FIG. 7(c). This state is referred to as an open pipe.

The operational parameter set at execution of the O-press step can be specified using a distance (referred to as an O-press depression amount) between the uppermost portion on the inner surface side of the upper die and the lowermost portion on the inner surface side of the lower die 40 at the time when the upper die 41 illustrated in FIG. 7(b) is at the lowermost position. In addition, the operational parameter may be specified by a gap (referred to as an O-press depression position) between the lowermost portion of the upper die 41 and the uppermost portion of the lower die 40 at the time when the upper die 41 illustrated in FIG. 7(b) is at the lowermost position. On the other hand, the compression ratio in the O-press step is defined as (W- L)/W (× 100%), where W is a width of the steel sheet S to be a material before the start of the U-press step, and L is a circumferential direction length of the portion corresponding to 1/2 of the thickness of the steel sheet S at the time of fastening the upper die 41 (the length of the portion where the die is in contact with the steel sheet S and the portion of the gap between the upper die 41 and the lower die 40). In addition, an O-press die radius which is a curvature radius of a curved surface of the upper die 41 and the lower die 40 coming in contact with the U-shaped formed body may be used as an operational parameter of the O-press step. When the U-shaped formed body is placed on the lower die 40, the U-shaped formed body is usually placed symmetrically such that the lowest point of the U-shaped cross section matches the lowest portion on the inner surface side of the lower die 40. However, the position where the U-shaped formed body is placed may be shifted in some cases depending on the shape of the U-shaped formed body or a change in the die shape due to wear of the lower die 40.

### (Welding step)

Next, the welding step will be described.

Thereafter, the open pipe formed in the O-press step is formed into a steel pipe by butting the end surfaces of the opening portions against each other and welding the end surfaces by a welding machine (joining means). The welding machine (joining means) to be used is, for example, a device including three types of welding machines, that is, a tack welding machine, an inner surface welding machine, and an outer surface welding machine. In these welding machines, the tack welding machine brings the end surfaces butted by the cage rolls into close contact with each other continuously in an appropriate positional relationship, and applies tack welding to the close contact portion over the entire length in the pipe axis direction. The steel pipe that has undergone tack welding is welded (submerged arc welding) from the inner surface of the butt portion by an inner surface welding machine, and further welded (submerged arc welding) from the outer surface of the butt portion by an outer surface welding machine.

### (Pipe expanding step)

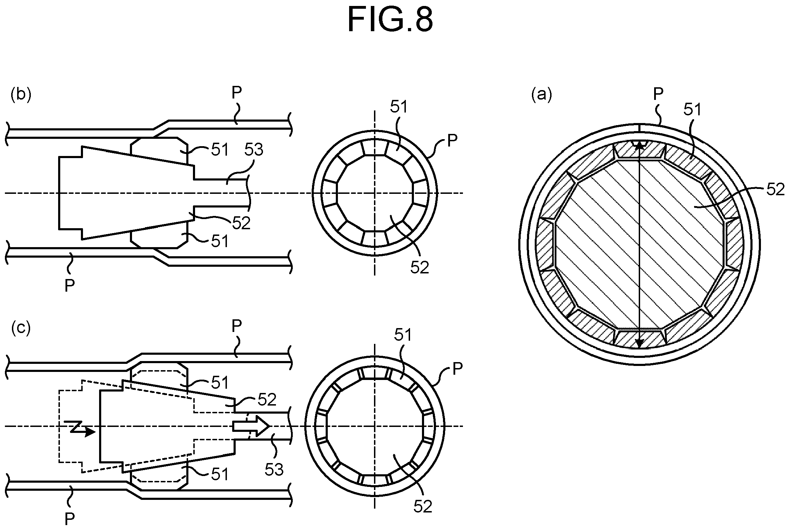

Next, the pipe expanding step will be described with reference to FIG. 8.

The steel pipe having the seam gap portion welded is processed such that a pipe expanding device is inserted into the steel pipe to expand the diameter of the steel pipe (referred to as pipe expansion). FIGS. 8(a) to 8(c) are diagrams illustrating a configuration example of a pipe expanding device. As illustrated in FIG. 8(a), the pipe expanding device includes a plurality of pipe expanding dies 51 having curved surfaces obtained by dividing an arc into a plurality of arcs along the circumferential direction of a tapered outer circumferential surface 52. When expanding the steel pipe using the pipe expanding device, as illustrated in FIGS. 8(b) and 8(c), the pipe expanding die 51 is first aligned with a pipe expanding start position by moving the steel pipe P using a steel pipe moving device. Then, by retracting a pull rod 53 from the pipe expanding start position, first pipe expanding processing is performed.

This allows each of the pipe expanding dies 51 in sliding contact with the tapered outer circumferential surface 52 to be displaced in the radial direction by a wedge action, expanding the steel pipe P. This reduces the level of irregularity in the cross-sectional shape of the steel pipe P, bringing the cross-sectional shape of the steel pipe P closer to a perfect circular shape. Next, the pull rod 53 is advanced to the pipe expanding start position to return the pipe expanding dies 51 to the inside in the vertical axial direction by a release mechanism, and then the steel pipe P is further moved by an amount corresponding to the pitch (axial length) of the pipe expanding dies 51. The pipe expanding dies 51 are adjusted to new pipe expanding positions, and then the above operation is repeated. This makes it possible to perform the pipe expanding processing over the entire length of the steel pipe P by the pitch of the pipe expanding dies 51.

At this time, examples of the operational parameters for determining the operational conditions of the pipe expanding step include the pipe expansion rate, the number of pipe expanding dies, and the radius of the pipe expanding dies. The pipe expansion rate refers to a ratio of a difference between an outer diameter of the steel pipe P after pipe expansion and an outer diameter of the steel pipe P before pipe expansion to an outer diameter of the steel pipe P before pipe expansion. The outer diameter of the steel pipe P before and after pipe expansion can be calculated by measuring the circumferential length of the steel pipe P. The pipe expansion rate can be adjusted by a stroke amount when the pipe expanding dies 51 are expanded in a radial direction. The number of pipe expanding dies refers to the number of pipe expanding dies coming in contact with the steel pipe P disposed in the circumferential direction when pipe expansion is performed. The radius of the pipe expanding die refers to a curvature radius of a portion coming in contact with the steel pipe P in each pipe expanding die in the circumferential direction.

Among these, the pipe expansion rate is the operational parameter that can easily adjust the out-of-roundness after the pipe expanding step at the time of occurrence of variation in attribute values such as yield stress and thickness of the steel sheet to be a material. An increase in the pipe expansion rate will apply the curvature of the region in contact with the pipe expanding die over the entire circumference uniformly onto the pipe according to the radius of the pipe expanding dies, leading to improvement of the out-of-roundness. At this time, the greater the number of pipe expanding dies, the more the local variation in curvature in the circumferential direction of the steel pipe can be suppressed, making it possible to achieve satisfactory out-of-roundness of the steel pipe after the pipe expanding step.

However, the upper limit of the pipe expansion rate is restricted in order to keep the diameter of the steel pipe as a product within a predetermined dimensional tolerance. In addition, a too large pipe expansion rate would increase the gap between the pipe expanding dies in the circumferential direction when the pipe expanding die expands, leading to deterioration of the out-of-roundness of the steel pipe in some cases. Further, a portion softened by a thermal impact during welding is locally and intensively deformed, which might largely reduce the thickness of the portion to bring the pipe thickness outside a predetermined tolerance range. In addition, there is a case where the compressive yield strength of a steel pipe product is lowered due to the Bauschinger effect, and it is necessary to consider setting the upper limit of the pipe expansion rate due to material restrictions when the steel pipe is used in a state where high compressive stress acts in the pipe circumferential direction (for example, a deep sea line pipe). Consequently, the pipe expansion rate in actual operation is set such that the out-of-roundness of the steel pipe falls within a predetermined value at a pipe expansion rate lower than the preset upper limit value of the pipe expansion rate.

### (Inspection step)

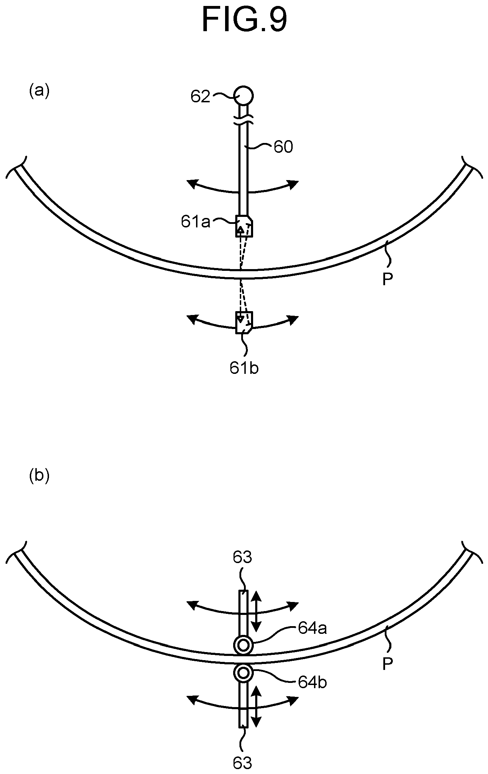

Finally, an inspection step will be described with reference to FIG. 9.

In an inspection step as the final manufacturing step of the steel pipe, the quality of the steel pipe is inspected, and the out-of-roundness of the steel pipe is measured. The out-of-roundness measured in the out-of-roundness measurement step is an index representing the degree of deviation of the outer diameter shape of the steel pipe from the perfect circular shape. Usually, the closer the out-of-roundness is to zero, the closer the cross-sectional shape of the steel pipe is to a perfect circle. The out-of-roundness is calculated based on the outer diameter information of the steel pipe measured by the out-of-roundness measurement device. For example, the steel pipe is equally divided in the circumferential direction at a certain pipe length position and the outer diameters at the opposing positions are selected. When the maximum diameter and the minimum diameter among them are defined as Dmax and Dmin, respectively, the out-of-roundness can be defined as Dmax-Dmin. At this time, the more the number of divisions into equal parts, the more the small irregularities in the steel pipe after the pipe expanding step can be reflected in the index, which is preferable. Specifically, it is preferable to use information divided into 4 to 36000 equal parts. It is more preferable to use equal parts of 360 or more. Note that, in defining the out-of-roundness of the steel pipe, the out-of-roundness may be defined by a difference between the inner diameter shape and the inner diameter of the steel pipe based on the inner diameter shape of the steel pipe instead of the outer diameter of the steel pipe.

Furthermore, the position in the longitudinal direction of the steel pipe targeted for the out-of-roundness measurement can be selected in any manner. The out-of-roundness in the vicinity of the end in the longitudinal direction of the steel pipe may be measured, or the out-of-roundness in the central portion in the longitudinal direction of the steel pipe may be measured. In addition, a plurality of out-of-roundness measurement positions may be selected from the longitudinal direction of the steel pipe to measure the out-of-roundness at each position, or an average value of the out-of-roundness measured at a plurality of positions in the longitudinal direction may be obtained. However, the out-of-roundness does not necessarily have to be represented by the difference between the maximum diameter and the minimum diameter. It is also allowable to use a method of calculating an equivalent temporary perfect circle (diameter) having the same area as the area inside the curve of a figure representing the outer diameter shape of the steel pipe in a continuous diagram and defining a region deviated from the outer diameter shape of the steel pipe as an image based on the temporary perfect circle. This is because image information can be used as an output in machine learning to be described below. As a means of measuring the outer diameter shape of the steel pipe, for example, the following methods can be used.
(a) As illustrated in FIG. 9(a), using a device including an arm 60 rotatable by 360 degrees about a substantially central axis of the steel pipe P, displacement gauges 61a and 61b attached to the distal end of the arm 60, and a rotation angle detector 62 that detects the rotation angle of the rotation shaft of the arm 60, a distance between the rotation center of the arm 60 and a measurement point on the outer circumference of the steel pipe P is measured with the displacement gauges 61a and 61b for each unit of minute angle of rotation of the arm 60, and then the outer diameter shape of the steel pipe P is specified based on the measured value.
(b) As illustrated in FIG. 9(b), using a device including a rotating arm 63 that rotates about the central axis of the steel pipe P, a frame (not illustrated) that is provided on the end side of the rotating arm 63 so as to be movable in the radial direction of the steel pipe P, a pair of pressing rollers 64a and 64b that comes into contact with the outer surface and the inner surface of the end of the steel pipe P and rotates with the rotation of the rotating arm 63, and a pair of pressing air cylinders (not illustrated) fixed to the frame that presses the pressing rollers 64a and 64b against the outer surface and the inner surface of the steel pipe P, the outer diameter shape of the steel pipe is specified based on the amount of movement in the radial direction of the frame and the pressing positions of the pressing rollers 64a and 64b by the individual pressing air cylinders.

Here, in the present embodiment, by comparing an out-of-roundness prediction result obtained by the out-of-roundness prediction model to be described below with the measured value of the out-of-roundness obtained in the inspection step described above, it is possible to verify the out-of-roundness prediction accuracy. Therefore, with respect to the prediction result of the out-of-roundness prediction model to be described below, it is also possible to improve the prediction accuracy obtained by the out-of-roundness prediction model by adding the performance value of the prediction error to the prediction result of the out-of-roundness prediction model.

### [Steel pipe out-of-roundness prediction model generation method]

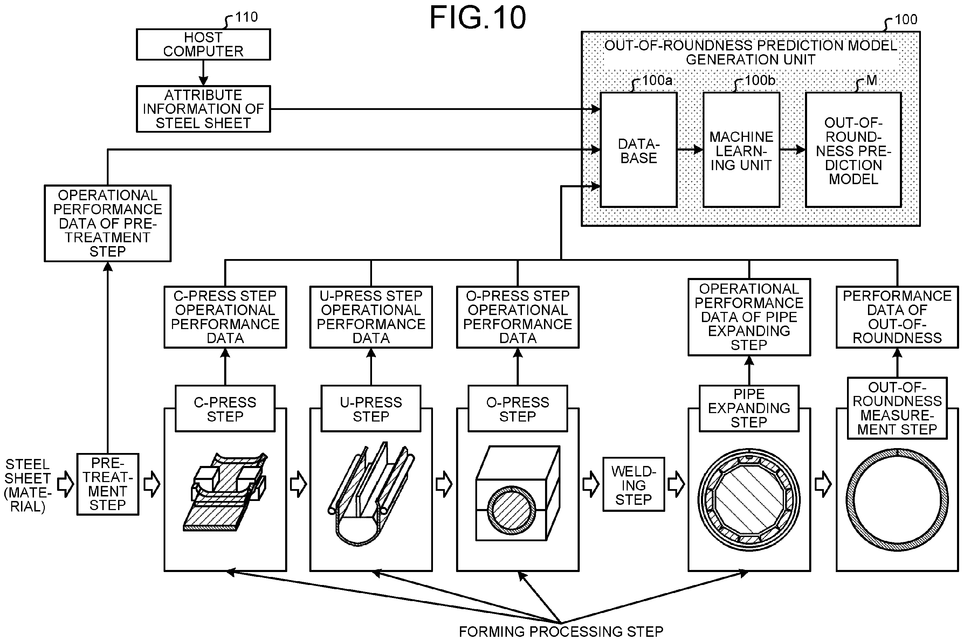

Next, a steel pipe out-of-roundness prediction model generation method according to an embodiment of the present invention will be described with reference to FIGS. 10. to 16

FIG. 10 is a diagram illustrating a steel pipe out-of-roundness prediction model generation method according to an embodiment of the present invention. An out-of-roundness prediction model generation unit 100 illustrated in FIG. 10 collects operational performance data in the U-press step, operational performance data in the O-press step, and performance data of out-of-roundness of a steel pipe after the pipe expanding step, and then generates an out-of-roundness prediction model M by machine learning. In addition, the out-of-roundness prediction model generation unit 100 may collect, as necessary, performance data of attribute information of the steel sheet to be the material, the operational performance data in the C-press step, and the operational performance data of the pipe expanding step as necessary, and may use the collected data as input performance data to the out-of-roundness prediction model M.

The performance data of the attribute information of the steel sheet is transferred from a host computer 110 to the out-of-roundness prediction model generation unit 100. However, steel sheet attribute information performance data may be transferred to the out-of-roundness prediction model generation unit 100 by a procedure of measuring the attribute information of the steel sheet before starting forming processing in the U-press step and inputting the result on a terminal device or the like. Further, the steel sheet attribute information performance data may include operational performance data of machining in the pretreatment step. For example, the data includes a width measurement value of the steel sheet after the pretreatment step. The data can be considered as part of the attribute information of the material in the UOE steel pipe forming processing step. In addition, the operational performance data in the U-press step, the operational performance data in the O-press step, and the operational performance data of the out-of-roundness after the pipe expanding step are transferred to the out-of-roundness prediction model generation unit 100, and are accumulated in a database 100a in a form of being linked as data for each target material specified by the production number, the product number, and the like.

The operational performance data of the C-press step and the operational performance data of the pipe expanding step may be added to the database 100a. The operational performance data to be accumulated in the database 100a may be various data that can be acquired as performance data. This is because even information not used for the performance data in generation of the out-of-roundness prediction model M by machine learning can be utilized when the out-of-roundness prediction model M is generated again later, making it possible to eliminate the need to accumulate the performance data again. At that time, when there is a step to omit, for example, in a case where the U-press step is performed without executing the C-press step, each data included in the operational performance data of the C-press step is accumulated in the database 100a as zero or blank.

The number of pieces of performance data to be accumulated in the database 100a as described above is to be at least 10 or more, preferably 100 or more, and more preferably 1000 or more. This is because, the more the number of pieces of data as the basis of machine learning model, the more improved the prediction accuracy of the out-of-roundness after the pipe expanding step. In the present embodiment, using the database 100a created in this manner, a machine learning unit 100b generates the out-of-roundness prediction model M by machine learning. In this machine learning, at least one or more pieces of operational performance data selected from the operational performance data of the U-press step, and one or more pieces of operational performance data selected from the operational performance data of the O-press step are used as input performance data, and performance data of the out-of-roundness of the steel pipe after the pipe expanding step in the steel pipe manufacturing process using the input performance data is used as output performance data. In addition, when necessary, it is also allowable to add, to the input performance data, one or more pieces of operational performance data selected from one or more pieces of operational performance data selected from the attribute information of the steel sheet, one or more pieces of operational performance data selected from the operation performance data of the C-press step, and one or more pieces of operational performance data selected from the operation performance data of the pipe expanding step.

The method of machine learning may be a known learning method. The machine learning can be implemented by using, for example, a known machine learning method using a neural network including deep learning, a convolutional neural network (CNN), a recurrent neural network (RNN), and the like. Examples of other methods include decision tree learning, random forest, support vector regression, and Gaussian process. In addition, an ensemble model combining a plurality of models may be used. Furthermore, it is also allowable to generate, as the out-of-roundness prediction model M, a machine learning model that determines whether the value is within a predetermined allowable range of out-of-roundness instead of the value of out-of-roundness, and that uses data obtained by binarizing the result into accept/fail as output performance data. At that time, a classification model such as k-nearest neighbor algorithm or logistic regression can be used. Additionally, the database 100a may accumulate operational performance data as needed and periodically (for example, monthly) update the out-of-roundness prediction model M. This improves the prediction accuracy of the out-of-roundness prediction model M.

The out-of-roundness prediction model M for the steel pipe after the pipe expanding step generated as described above has the following characteristics. That is, in the U-press step, the U-press tool is brought into contact with the vicinity of the center portion of the steel sheet in the width direction, and the steel sheet is processed so as to be wound around the distal end of the U-press tool. In this case, the bending moment applied to the steel sheet varies depending on the contact position with the U-press tool, leading to occurrence of bending deformation having a curvature distribution. In addition, the shape of the distal end of the U-press tool may sometimes be a shape in which curves having a plurality of curvatures are connected, and in this case, the curvature of the steel sheet varies along the surface of the U-press tool. Here, information for specifying the shape of the distal end of the U-press tool is referred to as shape information of the U-press tool.

On the other hand, when a combined deformation including compression and bending is applied to the U-shaped formed body in the O-press step, the bending moment applied in the O-press step is distributed according to the local curvature distribution of the steel sheet applied in the U-press step, similarly to the case where the bending moment acting on a deformed object referred to as a "bent beam" varies depending on the curvature of the beam. Furthermore, in the O-press step, deformation referred to as a "plastic hinge" in which bending strain is locally concentrated may occur in a portion having a large bending moment. In addition, the compressive force and the bending moment applied to the U-shaped formed body in the O-press step differ depending on the opening amount of the end of the U-shaped formed body in the width direction. With this situation, the deformation state of the U-shaped formed body is different in the O-press step, and the curvature distribution along the circumferential direction in the open pipe that has undergone forming processing is also different, which will have an impact on the out-of-roundness of the steel pipe after the pipe expanding step.

That is, since the deformation state applied to the steel sheet in the O-press step varies according to the curvature distribution of the U-shaped formed body that changes depending on the operational conditions of the U-press step, there is an impact on the curvature distribution in the circumferential direction of the steel pipe after the pipe expanding step. The reason why both the operational parameters of the U-press step and the O-press step are used as the input parameters of the out-of-roundness prediction model M is because the operational conditions of the U-press step and the operational conditions of the O-press step have a combined impact on the out-of-roundness of the steel pipe after the pipe expanding step.

It is known that the load in the pipe expanding step is proportional to the pipe thickness × yield stress of steel pipe, and the load (pipe expanding force) in the pipe expanding step increases in a steel pipe having a large pipe thickness or a steel sheet having a large yield stress. On the other hand, the equipment strength of the pipe expanding equipment tends to decrease in inverse proportion to the outer diameter of the pipe expanding tool. Therefore, when the outer diameter of the steel pipe decreases, the outer diameter of the pipe expanding tool inserted into the steel pipe also decreases, leading to a decrease in the equipment strength. In addition, the capability to improve the out-of-roundness of the steel pipe in the pipe expanding step tends to decrease as the load in the pipe expanding step approaches the equipment strength. Therefore, it might be difficult to achieve a sufficient improvement in the out-of-roundness of the steel pipe only by the pipe expanding step. Therefore, it is preferable to optimize the operational parameters of both the U-press step and the O-press step to improve the out-of-roundness of the steel pipe after the pipe expanding step. From such a viewpoint, it is necessary to include the operational parameters of both steps as the input to the out-of-roundness prediction model M.

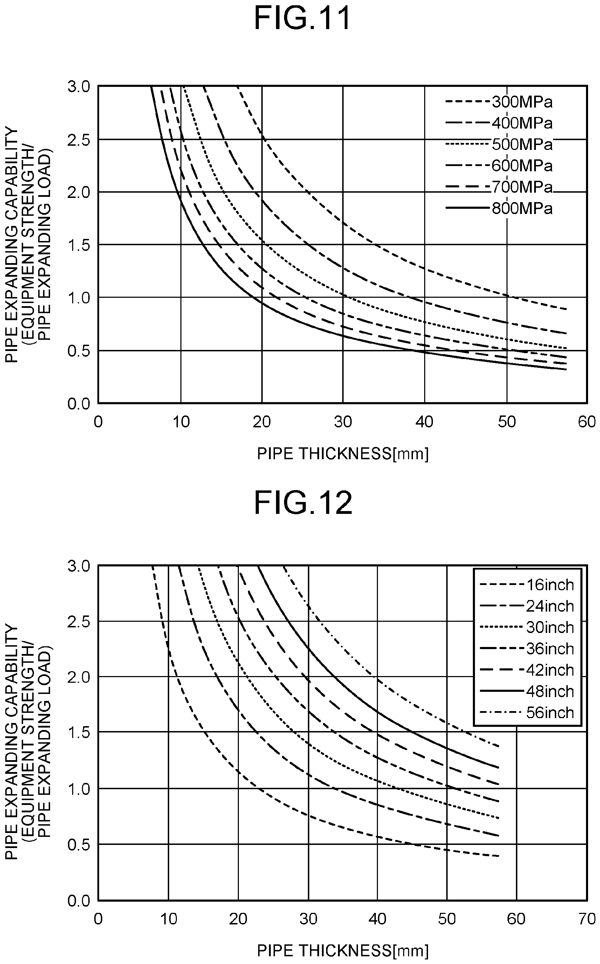

Here, the capability to improve the out-of-roundness of the steel pipe in the pipe expanding step (referred to as pipe expanding capability) is evaluated using the ratio of the equipment strength of the pipe expanding equipment to the pipe expanding force (pipe expanding load). This ratio is an index representing the margin of the equipment with respect to the force required for pipe expansion, and the larger the value, the higher the pipe expanding capability. The equipment strength of the pipe expanding equipment is approximately inversely proportional to the outer diameter of the steel pipe, and the pipe expanding load is proportional to the pipe thickness × yield stress of the steel pipe. Therefore, the pipe expanding capability is reduced in the case of manufacturing a steel pipe having a small diameter, a large thickness, and a high strength. As a specific example of the pipe expanding capability, the relationship among the outer diameter, the pipe thickness, and the yield stress is illustrated in FIGS. 11 and 12 for equipment in which a steel pipe having a pipe thickness of 50.8 mm, an outer diameter of 914.4 mm, and a yield stress of 300 MPa is the upper limit. FIG. 11 illustrates a relationship between the pipe thickness and the pipe expanding capability for each yield stress of a steel pipe having an outer diameter of 914.4 mm. The pipe expanding capability decreases with an increase in the pipe thickness, and decreases with an increase in the yield stress when the pipe thickness is the same. From such a viewpoint, in the present embodiment, the yield stress of the steel pipe is preferably 400 MPa to 800 MPa, and the pipe thickness is preferably 19 mm to 55 mm. More preferably, the yield stress is 500 MPa to 800 MPa and the pipe thickness is 25 mm to 55 mm. FIG. 12 is a diagram illustrating a relationship between the pipe thickness and the pipe expanding capability for each outer diameter of a steel pipe having a yield stress of 300 MPa. The pipe expanding capability decreases with an increase in the pipe thickness, and decreases with a decrease in the outer diameter when the pipe thickness is the same. From such a viewpoint, in the present embodiment, the outer diameter of the steel pipe is preferably 16 inches to 48 inches, and the pipe thickness is preferably 12 mm to 55 mm. More preferably, the outer diameter of the steel pipe is 16 to 36 inches and the pipe thickness is 19 mm to 55 mm.

In addition, the out-of-roundness prediction model M preferably includes one or more parameters selected from the attribute information of the steel sheet. Among the attribute information of the steel sheet, a certain degree of variations occurs in the yield stress and the thickness, for example, when manufacturing a steel sheet to be a material. These parameters will have an impact on the curvature applied to the steel sheet and the curvature after unloading in the bending processing at the time of pushing operation using the U-press tool. That is, by including a parameter that impacts the deformation state of the steel sheet at the time of bending processing in the attribute information of the steel sheet, the impact of the yield stress and the thickness for each material on the out-of-roundness can be individually considered. In addition, the O-press step is also a step of applying a bending force and a compressive force using a die, and changes the curvature of the steel sheet after unloading depending on the yield stress and the thickness. Therefore, it is preferable to use attribute information of the steel sheet as an input parameter of the out-of-roundness prediction model M.

On the other hand, it is preferable to include one or more operational parameters selected from the operational parameters of the pipe expanding step as the input to the out-of-roundness prediction model M. More preferably, the pipe expansion rate is to be used as the operational parameter of the pipe expanding step. This is because also in the manufacturing step of the UOE steel pipe using the high-strength steel sheet as a material, the pipe expansion rate in the pipe expanding step has a great impact on the final out-of-roundness of the product. However, in a case where the pipe expansion rate can be set only in a narrow range due to the reason such as the pipe expanding capability of the pipe expanding equipment, the range that can be changed as the operational parameter is narrow, and thus the pipe expansion rate is not to be necessarily included in the input of the out-of-roundness prediction model M. Furthermore, it is preferable to include one or more operational parameters selected from the operational parameters of the C-press step as an input to the out-of-roundness prediction model M. This is because the range in which bending processing is applied to the steel sheet in the C-press step is limited to the vicinity of the end of the steel sheet in the width direction, which does not necessarily match the region in which bending deformation is applied in the U-press step and the O-press step. Therefore, the steel pipe out-of-roundness prediction accuracy after the pipe expanding step is improved by using the operational parameters in the plurality of forming processing steps.

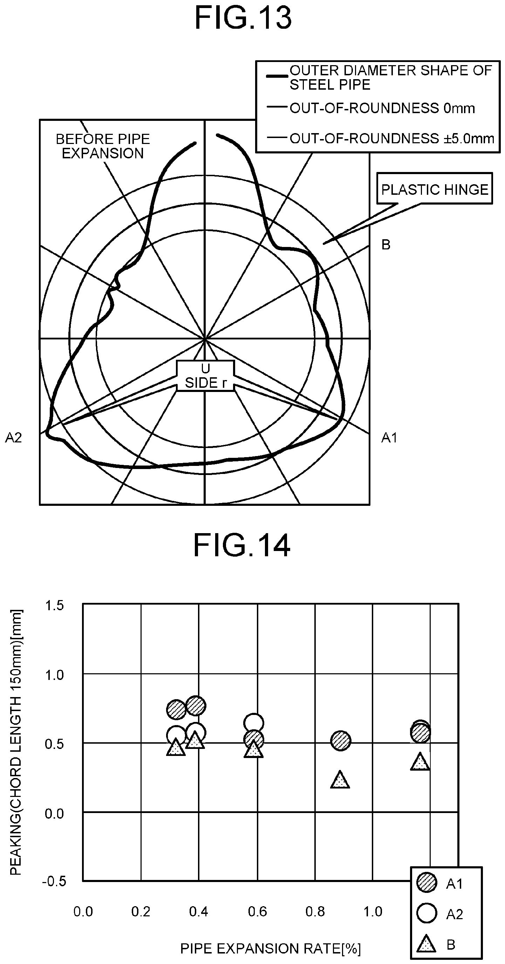

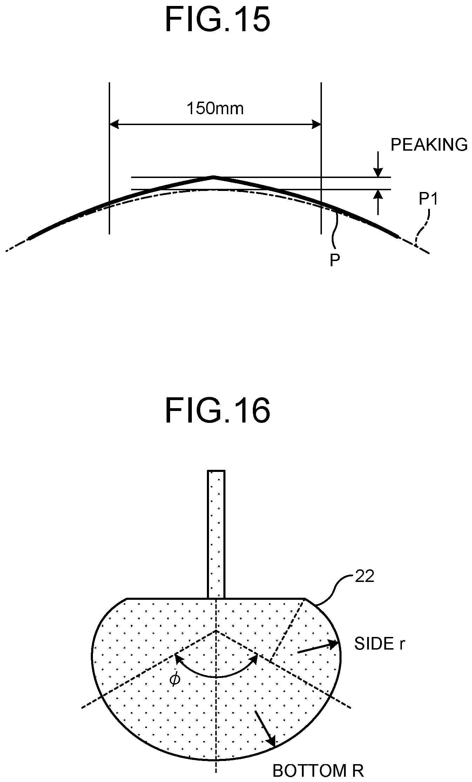

FIGS. 13 to 15 illustrate examples of the impact of the operational conditions of the U-press step and the O-press step on the out-of-roundness of the steel pipe after the pipe expanding step. The targeted steel pipe is a steel pipe of Product Standard X 65, and its dimensions are outer diameter 911.8 mm × pipe thickness 28.9 mm. FIG. 13 is a diagram illustrating a measurement result of the cross-sectional shape of the steel pipe before the pipe expanding step. Since the weld bead portion is thickened, the measurement result of the portion is excluded in the drawing. As the operational conditions of the U-press step, a U-press tool having a punch side r of 178 mm (curvature radius of the side surface portion of the U-press tool 22 illustrated in FIG. 16) was selected to perform forming processing. In this case, since the curvature radius of the side surface portion of the U-press tool is smaller than the inner radius of the steel pipe to be a product, the cross section of the steel pipe has a protruding shape at positions A1 and A2 of the steel sheet in contact with the side surface portion of the U-press tool (near a four o'clock direction and an eight o'clock direction in the cross section of FIG. 13). Furthermore, when the O-press step is executed on a steel sheet having such a state in the U-press step, local bending deformation concentrates on a part of the steel sheet, leading to occurrence of a local protrusion shape due to a plastic hinge in a two o'clock direction (position B) of the steel pipe cross section illustrated in FIG. 13.

Such a protrusion formed on a part of the steel pipe in the circumferential direction may cause an out-of-roundness deterioration referred to as peaking after the pipe expanding step. As illustrated in FIG. 15, the peaking is an index defined by a distance, on a steel pipe cross section after the pipe expanding step, between the protruding point and the point of an arc P1 which is at the center of a chord being a section having a predetermined distance (in this case, 150 mm) and which corresponds to a steel pipe outer diameter passing through an outer circumferential surface of the steel pipe P and both ends of the chord. At this time, the peaking is defined as positive when the peaking point is located on the protruding side of the arc corresponding to the outer diameter of the steel pipe, and as negative when the peaking point is located on the recessed side thereof. That is, when the value of peaking is 0, it means that the point is on an arc corresponding to the outer diameter of the steel pipe, and accordingly, the smaller the absolute value of peaking on the entire surface along the outer circumference of the steel pipe, the more improved the out-of-roundness.

FIG. 14 illustrates a result of examining peaking after expanding the steel pipe focusing on three protrusions A1, A2, and B illustrated in FIG. 13. In FIG. 14, the horizontal axis represents a pipe expansion rate which is an operational parameter of the pipe expanding step, and the vertical axis represents a value of peaking (Body PK). As illustrated in FIG. 14, the protrusions A1 and A2 occurring in the U-press step slightly tend to decrease when the pipe expansion rate is increased, but the decrease is moderate. In contrast, in the protrusion B occurring in the O-press step, the peaking value tends to decrease with an increase in the pipe expansion rate. As described above, the cross-sectional shape formed in the U-press step and the cross-sectional shape formed in the O-press step have different drop behavior of peaking with respect to the pipe expansion rate in the pipe expanding step. Therefore, it is necessary to appropriately set individual operational conditions in each forming processing step in order to improve the out-of-roundness.

### (Attribute information of steel sheet)

The applicable attribute information of the steel sheet to be the input data to the out-of-roundness prediction model can be any parameter having an impact on the out-of-roundness of the steel pipe after the pipe expanding step; the parameter may include yield stress of the steel sheet, tensile strength, modulus of longitudinal elasticity, thickness, thickness distribution in the sheet surface, yield stress distribution in the thickness direction of the steel sheet, the degree of the Bauschinger effect, and surface roughness. In particular, it is preferable to use, as an index, a factor having an impact on the deformation state and spring back of bending processing in the U-press step, and a factor having an impact on the deformation state and spring back of the steel sheet by compression/bending processing in the O-press step.

The yield stress of the steel sheet, the distribution of the yield stress in the thickness direction of the steel sheet, and the thickness of the steel sheet have a direct impact on the state of stress and strain in the bending processing. The tensile strength is a parameter reflecting the state of work hardening in bending processing, and has an impact on the stress state during bending deformation. The Bauschinger effect has an impact on the yield stress and the subsequent work hardening behavior when the load due to bending deformation is reversed, and impact on the stress state during bending deformation. In addition, the modulus of longitudinal elasticity of the steel sheet has an impact on the spring back behavior after the bending processing. Further, the thickness distribution in the sheet surface changes the distribution of the bending curvature in the U-press step, and the surface roughness has an impact on the frictional state between the die and the steel sheet in the O-press step, leading to an impact on the out-of-roundness of the steel pipe after the pipe expanding step.

Among these pieces of attribute information, it is particularly preferable to use the yield stress, the representative sheet thickness, the thickness distribution information, and the representative sheet width. These items, which are information measured in a quality inspection step of a thick sheet rolling step which is a step of manufacturing a steel sheet to be a material, have an impact on deformation behavior in the U-press step and the O-press step as well as having an impact on out-of-roundness of a steel pipe after the pipe expanding step. Furthermore, this is because the information is attribute information representing variation for each steel sheet as a material.

The yield stress is information that can be obtained from a tensile test of a small test piece for quality inspection collected from a thick steel sheet to be a material, and may be a representative value in a plane of the steel sheet to be a material. In addition, the representative sheet thickness is a thickness representing a thickness in a plane of a steel sheet to be a material, and may be a thickness of a central portion in a width direction of the steel sheet at an arbitrary position in a longitudinal direction of the steel sheet, or an average value of thicknesses in the longitudinal direction. Furthermore, an average value of the thickness values of the entire in-plane sheet of the steel sheet may be obtained and used as the representative sheet thickness. The thickness distribution information refers to information representing the thickness distribution in the plane of the steel sheet. A typical example is a crown which is a thickness distribution in the width direction of the steel sheet. The crown represents a difference in the thickness between a central portion of the steel sheet in the width direction, and a position away from the end of the steel sheet in the width direction by a predetermined distance (for example, 100 mm, 150 mm, or the like). However, the thickness distribution information is not limited thereto, and a coefficient of an approximate expression obtained by approximating the thickness distribution in the width direction with a quadratic or higher function may be used as the sheet thickness distribution information. In addition, the thickness distribution in the longitudinal direction may be used instead of the thickness distribution in the width direction of the steel sheet. Such representative sheet thickness and thickness distribution information may be acquired from data measured by a sheet thickness meter during rolling in a thick sheet rolling step, or may be data measured in a thick steel sheet inspection step.

The representative sheet width is a representative value regarding the width of the steel sheet as a material. A variation in the width of the thick steel sheet as a material will have an impact on the variation in the outer diameter accuracy of the steel pipe as a product. The value of the representative width may be a width at any position in the longitudinal direction of the steel sheet, or may be an average value of the widths in the longitudinal direction. At that time, it is allowable to measure the width of the steel sheet before the U-press step and use the measured value. In addition, it is also allowable to use an actual measurement value of the width of the steel sheet measured before the C-press step or before the pretreatment step.

### (Operational parameter of pretreatment step)

The attribute information of the steel sheet to be a material can include an operational parameter acquired in the pretreatment step. For example, as a pretreatment step, there is machining equipment in which a cutting tip is attached as a cutting tool to an outer circumferential surface of a rotating disk as a width end machining device (referred to as an edge miller) that processes a width direction end of a steel sheet as a material by machining. The steel sheet as a material is machined at the end in the width direction by a rotating cutting tool. At the same time as the adjustment of the width, the shape of the cutting tip may be imparted such that the end of the steel sheet in the width direction is ground into a chamfered shape referred to as a groove.

Here, as the operational parameter of the pretreatment step, it is possible to use a target value or an actual measurement value of the width of the steel sheet after the pretreatment step. In addition, it is also possible to use parameters for specifying the cutting amount and the groove shape of the end in the width direction in the pretreatment step. Furthermore, as factors that have an impact on the accuracy and variation of the width of the steel sheet after the pretreatment step, it is also allowable to include operational parameters related to wear of the cutting tip, such as the feed speed of the steel sheet during machining, the speed of the tip (circumferential speed of the disk), and the use time of the cutting tool. This is because these factors will have an impact on the width of the steel sheet as a material of the forming processing step and the shape of the end in the width direction.

### (Operational parameter of C-press step)

When the operational parameters of the C-press step are used for input of the out-of-roundness prediction model M, a parameter for specifying the shape formed by the forming surface 13a of the upper mold 13 and the shape formed by the pressing surface 14a of the lower mold 14 used in the C-press device can be used as the operational parameter. In addition, it is also allowable to use an end bending processing width (width subjected to end bending forming), a feeding amount, a feeding direction, and the number of times of feeding of the steel sheet, a push-up force (C-press force) by the hydraulic cylinder 16, and a gripping force by the clamp in the C-press step, as operational parameters. This is because these items are factors having an impact on the deformation in the end of the steel sheet in the width direction in the C-press step.

Here, there are cases where the shape formed by the forming surface 13a of the upper mold 13 is given as a shape having arcs of a plurality of curvature radii provided in a continuous shape or the shape is given by an involute curve or the like, allowing the use of a parameter for specifying a geometric cross-sectional shape. For example, when the cross-sectional shape is formed by a parabolic shape, the cross-sectional shape can be specified by using coefficients of a first-order term and a second-order term of a quadratic expression representing a parabola passing through an origin, and thus such a coefficient can be used as an operational parameter for the C-press step.

In another case where a plurality of molds are held and appropriately exchanged to be used for forming the shape formed by a forming surface 13a of the upper mold 13 according to conditions such as the outer diameter, the wall thickness, and the type of the steel pipe to be manufactured, a mold management number for specifying a mold to be used in the C-press step may be used as the operational parameter for the C-press step.

### (Operational Parameters of U-press step)

In the present embodiment, the operational parameter for the U-press step is used for the input to the out-of-roundness prediction model M. The operational parameters of the U-press step can include the shape information of the U-press tool (information for specifying the distal end shape of the U-press tool), the U-press depression amount, the U-press support initial interval, and the U-press support final interval. This is because these operational parameters will have a great impact on the deformation behavior of the steel sheet in the U-press step.

As described above, the U-press depression amount, the U-press support initial interval, and the U-press support final interval are operational parameters that can be commonly defined as the representative of the deformation form applied to the steel sheet in both the Kaiser type U-press device and the Verson type U-press device. However, it is allowable use, for each device, parameters that will have indirect impact on these parameters. For example, the opening angle of the link 29 and the position information of the sliding block 27 in the Kaiser type U-press device may be used. This is because these are operational parameters that can be indirectly associated with one of the U-press depression amount, the U-press support initial interval, and the U-press support final interval.

Meanwhile, the U-press tool used may be a tool having a shape illustrated in FIG. 16, for example. The shape of the U-press tool 22 illustrated in FIG. 16 is a shape obtained by giving an arc shape having a radius R in a range of an angle φ from a preset center point as a region coming in contact with the U-press tool 22 at the time of depression of the steel sheet, and by giving a shape of a side surface portion having a radius r smoothly connected from the arc shape of the radius R of the distal end as a region in which the steel sheet comes into contact with the brake roll. In this case, the shape of the U-press tool 22 is specified by three parameters of the angle φ, the distal end radius R (bottom R), and the side radius r (side r). The parameter for specifying the distal end shape of the U-press tool in this manner is referred to as shape information of the U-press tool. However, in a case where a plurality of U-press tools having different distal end shapes are provided according to conditions such as the outer diameter, the thickness, and the steel type of the steel pipe to be manufactured, a U-press tool management number for specifying the U-press tool to be used may be used as the operational parameter of the U-press step.

### (Operational parameters of O-press step)

In the present embodiment, the operational parameter for the O-press step is used for the input to the out-of-roundness prediction model M. Applicable operational parameters of the O-press step include an O-press depression amount, an O-press depression position, and an O-press die R. In particular, it is preferable to use an O-press depression amount. This is because, an increase in the O-press depression amount would lead to a state where a region between the point where the steel pipe receives the restraint and pressing force from the upper mold and the point where the steel pipe is restrained by the lower mold, mainly in the vicinity of three o'clock direction and nine o'clock directions of the steel pipe, are not restrained, to which bending and compression deformations are concentrated. This increases curvature in the region, which has an impact on the final out-of-roundness. At this time, when acquiring the operational performance data in the O-press step, the O-press depression amount, the O-press depression position, and the O-press die R are information necessary for controlling the O-press device, and thus, set values set by the host computer can be used. However, in a case where a measurement device (laser distance meter or the like) that measures the O-press depression amount or the O-press depression position is provided, the measurement result may be used as the operational performance data.

### (Operational parameters of pipe expanding step)

When the operational parameters of the pipe expanding step are used for the input to the out-of-roundness prediction model M, the pipe expansion rate can be used as the operational parameters of the pipe expanding step. The larger the pipe expansion rate, the more improved the out-of-roundness of the steel pipe after the pipe expanding step, but a value equal to or less than a preset upper limit value is used. At this time, since the pipe expansion rate is information necessary for controlling the pipe expanding device, the pipe expansion rate can use the set value set by a host computer. In addition, the average outer diameter of the entire circumference may be measured by a measuring device such as a shape/dimension meter after pipe expanding step is performed, and the average pipe expansion rate calculated by the difference from the outer diameter calculated from the width of the steel sheet before processing may be used as the operational performance data. Furthermore, in a case where a pipe expansion rate measurement device is provided in the pipe expanding step, the measurement result may be used as the operational performance data. As the operational parameter of the pipe expanding step, the number of pipe expanding dies and the pipe expanding die radius may be used in addition to the pipe expansion rate.

### [Steel pipe out-of-roundness prediction method]

Next, a steel pipe out-of-roundness prediction method according to an embodiment of the present invention will be described.

The steel pipe out-of-roundness prediction method according to an embodiment of the present invention is a method of predicting the out-of-roundness of the steel pipe after the pipe expanding step using the out-of-roundness prediction model M generated as described above. With this method, it is possible to verify whether the manufacturing conditions are appropriate in individual manufacturing steps of the steel pipe including: the U-press step of performing forming processing on the steel pipe into the U-shaped formed body by pressing with the U-press tool; the O-press step of reducing the seam gap portion of the U-shaped formed body and performing forming processing on the steel pipe into an open pipe; and the subsequent pipe expanding step of first joining the ends of the open pipe in the width direction to each other and then expanding the inner diameter of the steel pipe in which the ends in the width direction are joined to each other. The operational conditions of the U-press step and the O-press step will have a complex impact on the out-of-roundness of the steel pipe after the pipe expanding step, and it is possible to quantitatively evaluate the impact of these factors on the out-of-roundness of the product. Further, according to the out-of-roundness prediction model M using the attribute information of the steel sheet to be a material, even when there is variation in the attribute information of the steel sheet in the upstream step, it is possible to quantitatively evaluate the impact of these factors on the out-of-roundness of the product. This makes it possible to predict variations in out-of-roundness of a steel pipe product based on actual variations in attribute information of a steel sheet to be a material, leading to achievement of changing operational conditions of the U-press step and the O-press step in consideration of such variations in material.

### [Steel pipe out-of-roundness control method]

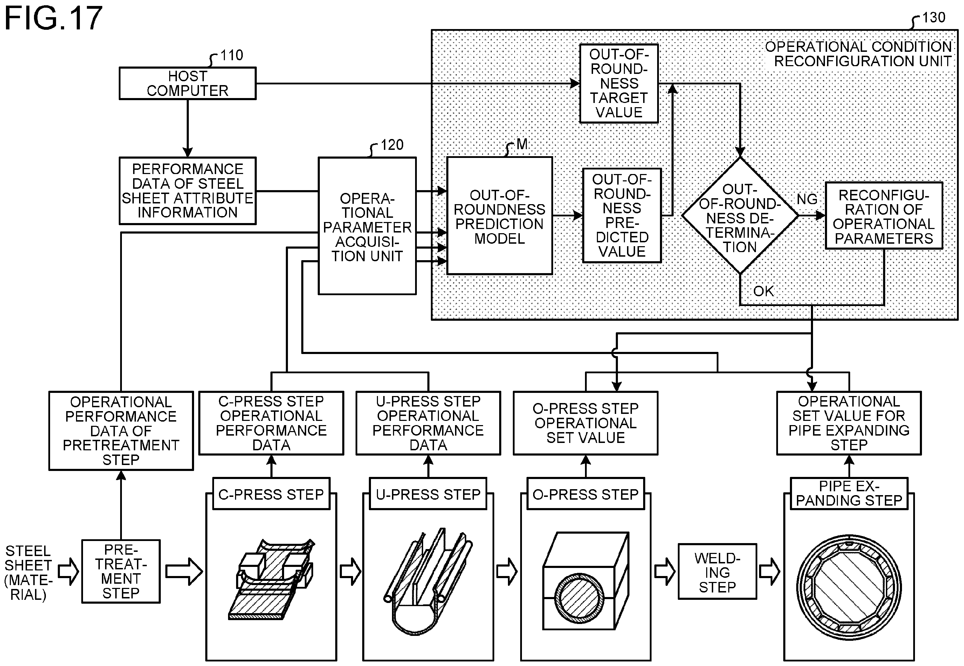

Next, a steel pipe out-of-roundness control method according to an embodiment of the present invention will be described with reference to FIG. 17.

In the present embodiment, the out-of-roundness of the steel pipe is controlled as follows using the steel pipe out-of-roundness prediction method after the pipe expanding step using the out-of-roundness prediction model M of the steel pipe. First, a reconfiguration target step is selected from a plurality of forming processing steps constituting the manufacturing step of the steel pipe. Then, before the start of the reconfiguration target step, the out-of-roundness of the steel pipe after the pipe expanding step is predicted using the out-of-roundness prediction model M. Subsequently, reconfiguration is performed on one or more operational parameters selected from at least the operational parameters of the reconfiguration target step or one or more operational parameters selected from the operational parameters of the forming processing step on the downstream side of the reconfiguration target step so as to reduce the out-of-roundness of the steel pipe after the pipe expanding step.

Here, the plurality of forming processing steps constituting the steel pipe manufacturing process refers to the C-press step, U-press step, O-press step and the pipe expanding step, which are the steps of applying plastic deformation onto the steel sheet to form the steel pipe into a predetermined shape. For the reconfiguration target step, a certain step is selected from these forming processing steps. Before execution of the forming processing in the selected reconfiguration target step, the out-of-roundness of the steel pipe after the pipe expanding step is predicted using the out-of-roundness prediction model M for the steel pipe. At this time, the forming processing of the steel sheet has been completed in the forming processing step on the upstream side of the reconfiguration target step, and thus, when the operational parameters of the forming processing step on the upstream side are to be used, the performance data on operational parameters can be used for the input to the out-of-roundness prediction model M. In contrast, the operational performance data cannot be collected in the downstream forming processing steps including the reconfiguration target step, and thus, the set value preset in the host computer or the like is used for the input to the out-of-roundness prediction model M for the steel pipe. In this manner, the out-of-roundness of the steel pipe after the pipe expanding step for the target material can be predicted.

Subsequently, determination is made as to whether the out-of-roundness predicted as the out-of-roundness of the steel pipe after the pipe expanding step falls within the out-of-roundness allowed as a product. With this operation, when making the out-of-roundness of the steel pipe after the pipe expanding step smaller than the predicted value, it is possible to reconfigure the operational conditions in the reconfiguration target step and the forming processing step on the downstream side of the reconfiguration target step. Here, the operational parameter to be reconfigured may be an operational parameter in the reconfiguration target step or an operational parameter in the forming processing steps downstream of the reconfiguration target step. An operational parameter of the forming processing step suitable for changing the out-of-roundness of the steel pipe after the pipe expanding step will preferably be selected according to a difference between the predicted out-of-roundness and the out-of-roundness allowed as a product. In addition, it is allowable to reconfigure both the operational parameters in the reconfiguration target step and the operational parameters in a certain forming processing step downstream of the reconfiguration target step. This is because the out-of-roundness of the steel pipe after the pipe expanding step can be effectively changed when there is a large difference between the predicted out-of-roundness and the out-of-roundness allowed as a product.

Table 1 specifically illustrates a case of the forming processing step selected as the reconfiguration target step and the forming processing step in which the operational parameters can be reconfigured correspondingly. Case 1 selects the C-press step as the reconfiguration target step in the steel pipe manufacturing process including the C-press step. At this time, before the start of the C-press step, the out-of-roundness of the steel pipe after the pipe expanding step is predicted using the set values of the operational parameters in the forming processing step including the U-press step and the O-press step. When the predicted out-of-roundness is large, it is possible to reconfigure any operational parameter in each forming processing step of the C-press step, U-press step, O-press step, and the pipe expanding step. The operational parameters to be reconfigured are not limited to the operational parameters of the C-press step and may also be the operational parameters of other forming processing steps. When the attribute information of the steel sheet is included as the input to the out-of-roundness prediction model M, the performance data including the measured value and the like related to the attribute information of the steel sheet can be used for the input before starting the C-press step being the reconfiguration target step.

In cases 2 and 3, it is possible to select the reconfiguration target step and the operational parameters to be reconfigured according to the concept similar to case 1. Case 4 is a case where the pipe expanding step is set as the reconfiguration target step. At this time, before the start of the pipe expanding step, the out-of-roundness of the steel pipe after the pipe expanding step is predicted using the out-of-roundness prediction model M. In this case, at least operational performance data in the U-press step and the O-press step can be used for the input to the out-of-roundness prediction model M. In addition, it is also allowable to use performance data of the attribute information of the steel sheet or operational performance data in the C-press step. In this manner, the predicted out-of-roundness of the steel pipe after the pipe expanding step is compared with the out-of-roundness allowed as a product, and when reducing the out-of-roundness, the operational parameter in the pipe expanding step is reconfigured. It is preferable to use the pipe expansion rate as the operational parameter of the pipe expanding step to be reconfigured. Note that the amount of change from the initially set value of the pipe expansion rate as a reconfiguration target may be reconfigured based on performance data obtained from operational experience. However, when the input of the out-of-roundness prediction model M includes the pipe expansion rate of the pipe expanding step, the out-of-roundness of the steel pipe after the pipe expanding step may be predicted again using the reconfigured value of the pipe expansion rate as the input to the out-of-roundness prediction model M, and the appropriateness of the conditions for reconfiguration may be determined.

**Table 1**

| Case | Reconfiguration target step | C-press step | U-press step | O-press step | Pipe expanding step |
|---|---|---|---|---|---|
| 1 | C-press step | ○ | ○ | ○ | ○ |
| 2 | U-press step | - | ○ | ○ | ○ |
| **3** | **O-press step** | **-** | **-** | **○** | **○** |
| **4** | **Pipe expanding step** | **-** | **-** | **-** | **○** |

| | | | | | |
|---|---|---|---|---|---|
| **○: Forming processing step for which operational parameter can be reconfigured** | | | | | |

Here, the steel pipe out-of-roundness control method according to an embodiment of the present invention will be described with reference to FIG. 17. An example illustrated in FIG. 17 is a case where the O-press step is selected as the reconfiguration target step, the U-press step is completed, and the U-shaped formed body is transferred to the O-press device. At this time, the operational performance data in the U-press step is transmitted to an operational condition reconfiguration unit 130 via an operational parameter acquisition unit 120. The operational performance data may be transmitted from a control computer provided in each forming processing equipment (equipment that executes the forming processing step) via a network. However, the data may be once transferred from the control computer of each forming processing equipment to the host computer 110 that performs overall control of the steel pipe manufacturing process, and then transferred from the host computer 110 to the operational condition reconfiguration unit 130. In addition, data to be transmitted to the operational condition reconfiguration unit 130 is the performance data regarding the attribute information of the steel sheet transmitted from the host computer 110 as necessary, and is the operational performance data in the pretreatment step in a case where the steel sheet undergoes the pretreatment step. Furthermore, operational performance data in the C-press step may also be transferred as necessary. The set values of the operational parameters of the O-press step and the pipe expanding step, which are forming processing steps downstream of the reconfiguration target step and the reconfiguration target step, are transferred from the control computer of each forming processing equipment to the operational condition reconfiguration unit 130. However, when the set values of the operational parameters in the O-press step and the pipe expanding step are stored in the host computer 110, the set values may be transferred from the host computer 110 to the operational condition reconfiguration unit 130. Note that the out-of-roundness target value determined according to the specification of the steel pipe as a product is transferred from the host computer 110 to the operational condition reconfiguration unit 130.

The operational condition reconfiguration unit 130 predicts the out-of-roundness of the steel pipe after the pipe expanding step based on these pieces of information by using the out-of-roundness prediction model M online, and compares the predicted out-of-roundness (out-of-roundness predicted value) with the target out-of-roundness (out-of-roundness target value). Subsequently, when the predicted out-of-roundness is smaller than the out-of-roundness target value, the operational condition reconfiguration unit 130 determines the operational conditions of the remaining forming processing steps without changing the set values of the operational conditions of the U-press step, the O-press step, and the pipe expanding step, and manufactures the steel pipe. On the contrary, when the predicted out-of-roundness is larger than the out-of-roundness target value, the operational condition reconfiguration unit 130 reconfigures at least the operational condition of the O-press step or the operational condition of the pipe expanding step. Specifically, the O-press depression amount of the O-press step can be reconfigured. In addition, the pipe expansion rate in the pipe expanding step can be reconfigured. Furthermore, both the O-press depression amount and the pipe expansion rate can be reconfigured.

The operational condition reconfiguration unit 130 may perform the out-of-roundness prediction again using a reconfigured value of the operational parameters reconfigured in this manner as the input data to the out-of-roundness prediction model M, confirm whether the predicted out-of-roundness is smaller than the out-of-roundness target value, and determine the reconfigured value of the operational conditions of the O-press step and the pipe expanding step. The reconfigured operational conditions of the O-press step and the pipe expanding step are transmitted to the individual control computers, and the operational conditions of the O-press step and the pipe expanding step are determined. By repeatedly performing the out-of-roundness determination in the operational condition reconfiguration unit 130 a plurality of times, an appropriate operational conditions of the O-press step and the pipe expanding step can be set even when a strict out-of-roundness target value is set, making it possible to manufacture a steel pipe with further improvement in the out-of-roundness. Furthermore, it is also allowable to perform steps in which the out-of-roundness control of the steel pipe after the pipe expanding step having the O-press step defined as the reconfiguration target step is executed in this manner, the out-of-roundness control of the steel pipe after the pipe expanding step having the pipe expanding step defined as the reconfiguration target step is executed again for the steel pipe that has undergone forming processing and be welded into the open pipe. This is because the steel pipe out-of-roundness prediction accuracy is further improved due to the state where the operational performance data of the O-press step has been obtained.

As described above, the steel pipe out-of-roundness control method according to an embodiment of the present invention uses the out-of-roundness prediction model M that takes the impact on the out-of-roundness due to the interaction between the U-press step and the O-press step into consideration, making possible to set an appropriate operational condition for improving the out-of-roundness of the steel pipe after the pipe expanding step, leading to achievement of manufacture of a steel pipe having satisfactory out-of-roundness. In addition, it is possible to realize highly accurate out-of-roundness control reflecting variation in attribute information of a steel sheet to be a material.

### [Steel pipe out-of-roundness prediction device]

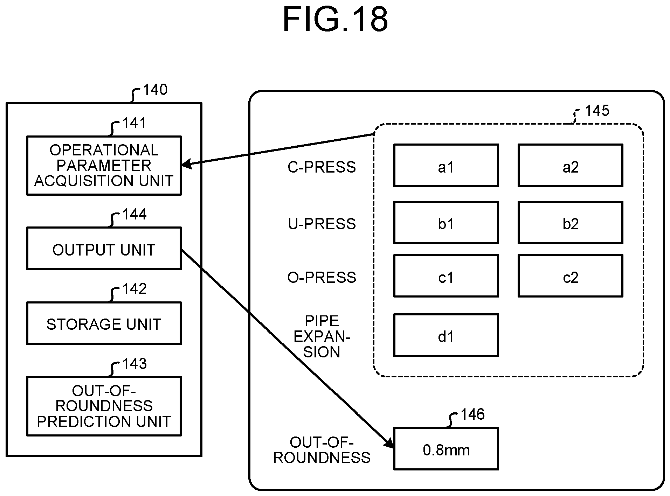

Next, a steel pipe out-of-roundness prediction device according to an embodiment of the present invention will be described with reference to FIG. 18.

FIG. 18 is a diagram illustrating a configuration of a steel pipe out-of-roundness prediction device according to an embodiment of the present invention. As illustrated in FIG. 18, a steel pipe out-of-roundness prediction device 140 according to an embodiment of the present invention includes an operational parameter acquisition unit 141, a storage unit 142, an out-of-roundness prediction unit 143, and an output unit 144.

The operational parameter acquisition unit 141 includes a certain interface capable of acquiring the out-of-roundness prediction model M generated by the machine learning unit from the out-of-roundness prediction model generation unit 100, for example. For example, the operational parameter acquisition unit 141 preferably includes a communication interface for acquiring the out-of-roundness prediction model M from the out-of-roundness prediction model generation unit 100. In this case, the operational parameter acquisition unit 141 may receive the out-of-roundness prediction model M from a machine learning unit 100b using a predetermined communication protocol. In addition, the operational parameter acquisition unit 141 acquires operational conditions for forming processing equipment (facility for executing the forming processing step) from a control computer or a host computer installed in the facility used in each forming processing step. For example, the operational parameter acquisition unit 141 preferably includes a communication interface for acquiring operational conditions. In addition, the operational parameter acquisition unit 141 may acquire input information based on a user's operation. In this case, the steel pipe out-of-roundness prediction device 140 further includes an input unit including one or more input interfaces that detect a user input and acquire input information based on the user's operation. Examples of the input unit include, but are not limited to, a physical key, a capacitive key, a touch screen integrated with a display of the output unit, a microphone for voice input, and the like. For example, the input unit receives an input of the operational condition for the out-of-roundness prediction model M acquired from the out-of-roundness prediction model generation unit 100 by the operational parameter acquisition unit 141.

The storage unit 142 includes at least one semiconductor memory device, at least one magnetic memory device, at least one optical memory device, or a combination of at least two types of these. The storage unit 142 functions as, for example, a main storage device, an auxiliary storage device, or cache memory. The storage unit 142 stores any kind of information used for the operation of the steel pipe out-of-roundness prediction device 140. The storage unit 142 stores, for example, the out-of-roundness prediction model M acquired from the out-of-roundness prediction model generation unit 100 by the operational parameter acquisition unit 141, the operational condition acquired from the host computer by the operational parameter acquisition unit 141, and the out-of-roundness information predicted by the steel pipe out-of-roundness prediction device 140. The storage unit 142 may store a system program, an application program, and the like.

The out-of-roundness prediction unit 143 includes one or more processors. In the present embodiment, the processor includes, but not limited to, a general-purpose processor or a dedicated processor specialized for specific processing. The out-of-roundness prediction unit 143 is communicably connected to individual components constituting the steel pipe out-of-roundness prediction device 140, and controls the operation of the entire steel pipe out-of-roundness prediction device 140. The out-of-roundness prediction unit 143 may be any general-purpose electronic device such as a personal computer (PC) or a smartphone. The out-of-roundness prediction unit 143 is not limited thereto, and may be one server device or a plurality of server devices capable of communicating with each other, or may be another electronic device dedicated to the out-of-roundness prediction device 140. The out-of-roundness prediction unit 143 calculates a predicted value of the steel pipe out-of-roundness information using the operational conditions acquired through the operational parameter acquisition unit 141 and the out-of-roundness prediction model M acquired from the out-of-roundness prediction model generation unit 100.

The output unit 144 outputs the predicted value of the out-of-roundness information of the steel pipe calculated by the out-of-roundness prediction unit 143 to a device for setting the operational conditions of the forming processing equipment. The output unit 144 may include one or more output interfaces that output information and notify the user. The output interface is a display, for example. Examples of the display include an LCD or an organic EL display. The output unit 144 outputs data obtained by the operation of the steel pipe out-of-roundness prediction device 140. The output unit 144 may be connected to the steel pipe out-of-roundness prediction device 140 as an external output device instead of being provided in the steel pipe out-of-roundness prediction device 140. As the connection method, for example, any method such as USB, HDMI (registered trademark), or Bluetooth (registered trademark) can be used. Examples of the output unit 144 include, but are not limited to, a display that outputs information by video, a speaker that outputs information by audio, and the like. For example, the output unit 144 presents the predicted value of the out-of-roundness information calculated by the out-of-roundness prediction unit 143 to the user. The user can appropriately set the operational conditions of the forming processing equipment based on the predicted value of the out-of-roundness presented by the output unit 144.

A more preferable form of the steel pipe out-of-roundness prediction device 140 after the pipe expanding step as described above is a terminal device such as a tablet terminal including: an input unit 145 that acquires input information based on a user's operation; and a display unit 146 that displays a predicted value of the out-of-roundness information calculated by the out-of-roundness prediction unit 143. This type of device has a function of acquiring input information based on a user's operation from the input unit 145, and updating a part or all of the operational parameters of the forming processing step already input to the steel pipe out-of-roundness prediction device 140, by using the acquired input information. That is, when the out-of-roundness information of the steel pipe has been predicted by the out-of-roundness prediction unit 143 for the material to be formed being processed in the forming processing equipment, it is possible to provide a function of receiving an operation, made by an operator using the terminal device, of performing a correction input of a part of the operational parameters of the forming processing step already input to the operational parameter acquisition unit 141. At this time, the operational parameter acquisition unit 141 holds the initial input data for the operational parameters to which the correction input has not been made from the terminal device among the operational parameters of the forming processing step, and changes only the operational parameter to which the correction input has been made. With this configuration, new input data to the out-of-roundness prediction model M is generated in the operational parameter acquisition unit 141, and a predicted value of the out-of-roundness information based on the input data is calculated by the out-of-roundness prediction unit 143. Furthermore, the calculated predicted value of the out-of-roundness information is displayed on the display unit 146 of the terminal device through the output unit 144. With this procedure, the person such as an operator of the forming processing equipment and a factory manager can immediately confirm the predicted value of the out-of-roundness information when the operational parameter of the forming processing step has been changed, and can promptly change the operational condition to an appropriate operational condition.

### [Examples]

### [Example 1]

In the present Example, using a steel sheet having a sheet thickness of 31.8 mm to 32.4 mm, a sheet width of 2760 mm to 2780 mm, and a tensile strength of 480 MPa to 600 MPa, a steel pipe having an API grade X56, pipe thickness of 31.8 mm × outer diameter of 914.4 mm was manufactured through the steps of a sheet width processing step, a C-press step, a U-press step using a Kaiser type U-press device, an O-press step, a welding step, and a pipe expanding step. In the manufacturing, a steel sheet as a material was processed into a sheet width of 2751 mm in the sheet width processing step, and end bending was applied in the C-press step to the steel sheet in a range of 180 mm from the end in the width direction using an upper mold having a curvature radius of 310 mm of the forming surface. In the U-press step, a Kaiser-type U-press device was used to execute the U-press step. In the U-press step, two types of U-press tools with a bottom R of 362 mm, a bottom R angle of φ 120 degrees, and a side r of 178 mm and 191 mm were used, and the U-press support initial interval was set so as to achieve the U-press support final interval 564 ± 30 mm, and the height of the pressing portion was set so as to achieve the U-press depression amount 858.8 ± 12.7 mm. In the U-press device, the U-press depression amount after the steel sheet comes into contact with the pushing portion is 279.4 mm, and the support portion interval is narrowed by 286 mm.

In the O-press step, a mold having an R 451 mm was used for both the upper and lower dies, and the press was performed until the distance between the uppermost point of the upper die and the lowermost point of the lower die became 903 ± 3 mm. Subsequently, in the pipe expanding step, the diameter of the steel pipe was expanded by setting the inner diameter to be 852 mm using a pipe expanding die having a pipe expanding die radius of 390 mm and divided into 12 in the circumferential direction. The actual pipe expansion rate at this time was in the range of 0.8% to 1.2%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 1000 pieces of performance data obtained through such a manufacturing step were accumulated in the database, the out-of-roundness prediction model M was generated using the device illustrated in FIG. 10. The generated out-of-roundness prediction model M is a machine learning model having inputs including attribute information of the steel sheet, an operational parameter of the U-press step, an operational parameter of the O-press step, and an operational parameter of the pipe expanding step. The machine learning used a method of a neural network, and used three layers of intermediate layers and five nodes for each intermediate layer. The activation function used was a sigmoid function. The attribute information of the steel sheet, which is used as the input to the out-of-roundness prediction model M, was the representative sheet thickness and the yield stress of the steel sheet. The parameters used as the operational parameters of the U-press step were the side r of the U-press tool, the U-press support final interval, and the U-press depression amount. The parameter used as the operational parameter of the O-press step was an O-press depression amount. The parameter used as the operational parameter of the pipe expanding step was the pipe expansion rate. The out-of-roundness prediction model M thus generated was installed as an online model on the system illustrated in FIG. 17. With the out-of-roundness target value set to 8 mm, and with data acquired from a host computer, specifically, representative sheet thickness and a yield stress of a steel sheet among performance data at the time of manufacturing a steel sheet in a thick sheet rolling step as a previous step as performance data of attribute information of a steel sheet to be a material, a steel pipe was manufactured with reconfigured operational conditions. Note that the out-of-roundness of the steel pipe was more improved when the side r of the U-press tool was 191 mm than when the side r was 178 mm. Therefore, a U-press tool having a bottom R 362 mm, a bottom R angle φ 120 degrees, and a side r 191 mm was used thereafter.

In the steel pipe out-of-roundness control method in the present Example, first, the end bending processing width in the C-press step was set to 180 mm, the U-press step was selected as the reconfiguration target step, and the U-press support final interval and the O-press depression amount in the O-press step were reconfigured as the operational conditions before execution of the U-press step, and then 100 steel pipes were manufactured. As a result, the average value of the out-of-roundness was 6.5 mm, which was improved from the past value of 7.9 mm, and the acceptance rate was also improved from 40% to 70%. Next, the reconfiguration target step was set to the U-press step, reconfiguration of the pipe expansion rate was performed in addition to the reconfiguration of the U-press support final interval and the O-press depression amount as the operational conditions before execution of the U-press step, and then 100 steel pipes were manufactured. As a result, the average value of the out-of-roundness was 5.0 mm, and the acceptance rate was 90%, which were further improved. Furthermore, with the reconfiguration target step as the U-press step, the U-press support final interval, the O-press depression amount, and the pipe expansion rate were reconfigured as operational conditions before execution of the U-press step. Together with this, the O-press step was selected as the reconfiguration target step after completion of the U-press step and before execution of the O-press step, and the operational conditions of the O-press step and the pipe expanding step were reconfigured again to manufacture 100 steel pipes. As a result, the average value of the out-of-roundness was 4.8 mm, and the acceptance rate was 95%, which were further improved.

### [Example 2]

In the present Example, using a steel sheet having a sheet thickness of 25.5 mm to 26.0 mm, a sheet width of 1665 to 1680, and a tensile strength of 650 MPa to 780 MPa, a steel pipe having an API grade X 80, a pipe thickness 25.4 mm × outer diameter 558.8 mm was manufactured through the steps of a sheet width processing step, a C-press step, a U-press step using a Kaiser type U-press device, an O-press step, a welding step, and a pipe expanding step. In the manufacturing, a steel sheet as a material was processed into a sheet width of 1662 mm in the sheet width processing step, and end bending was applied in the C-press step to the steel sheet in a range of 135 mm from the end in the width direction using an upper mold having a curvature radius of 170 mm of the forming surface. In the U-press step, a Kaiser-type U-press device was used to execute the U-press step. In the U-press step, a U-press tool having a bottom R of 225 mm, a bottom R angle φ of 120 degrees, and a side r of 110 mm was used, and the U-press support initial interval was set to achieve the U-press support final interval of 314 ± 20 mm, and the height of the pressing portion was set to achieve the amount of the U-press depression amount 706.4 ± 12.7 mm.

In the O-press step, a die having an O-press die radius R 276 mm was used for both the upper and lower dies, and the press was performed until the distance (O-press depression amount) between the uppermost point of the upper die and the lowermost point of the lower die became 578 ± 2 mm. Subsequently, in the pipe expanding step, the diameter of the steel pipe was expanded by setting the inner diameter to be 503 mm using a pipe expanding die having a pipe expanding die radius of 240 mm and divided into 10 in the circumferential direction. The actual pipe expansion rate at this time was in the range of 0.8% to 1.2%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 150 pieces of performance data obtained through such a manufacturing step were accumulated in the database, the out-of-roundness prediction model M was generated using the device illustrated in FIG. 10. The generated out-of-roundness prediction model M is a machine learning model having inputs including attribute information of the steel sheet, an operational parameter of the U-press step, an operational parameter of the O-press step, and an operational parameter of the pipe expanding step. The machine learning method used was decision tree learning, in which the maximum depth of the hierarchy of the decision tree was set to 5, and the maximum number of leaves in the generated decision tree was set to 200. The attribute information of the steel sheet, which is used as the input to the out-of-roundness prediction model M, was the representative sheet thickness and the yield stress of the steel sheet. The parameters used as the operational parameters of the U-press step were the U-press support final interval, and the U-press depression amount. The parameter used as the operational parameter of the O-press step was an O-press depression amount. The parameter used as the operational parameter of the pipe expanding step was the pipe expansion rate. The out-of-roundness prediction model M thus generated was installed as an online model on the system illustrated in FIG. 17. With the out-of-roundness target value set to 5 mm, and with data acquired from a host computer, specifically, representative sheet thickness and a yield stress of a steel sheet among performance data at the time of manufacturing a steel sheet in a thick sheet rolling step as a previous step as performance data of attribute information of a steel sheet to be a material, a steel pipe was manufactured with reconfigured operational conditions.

In the steel pipe out-of-roundness control method in the present Example, first, the U-press step was selected as the reconfiguration target step, and the U-press support final interval and the O-press depression amount in the O-press step were reconfigured as the operational conditions before execution of the U-press step, and then 100 steel pipes were manufactured. As a result, the average value of the out-of-roundness was 4.2 mm, which was improved from the past value of 5.0 mm, and the acceptance rate was also improved from 60% to 80%. Next, the reconfiguration target step was set to the U-press step, reconfiguration of the pipe expansion rate was performed in addition to the reconfiguration of the U-press support final interval and the O-press depression amount as the operational conditions before execution of the U-press step, and then 100 steel pipes were manufactured. As a result, the average value of the out-of-roundness was 2.8 mm, and the acceptance rate was 90%, which were further improved. Furthermore, with the reconfiguration target step as the U-press step, the U-press support final interval, the O-press depression amount, and the pipe expansion rate were reconfigured as operational conditions before execution of the U-press step. Together with this, the O-press step was selected as the reconfiguration target step after completion of the U-press step and before execution of the O-press step, and the O-press depression amount and the pipe expansion rate were reconfigured again to manufacture 100 steel pipes. As a result, the average value of the out-of-roundness was 2.5 mm, and the acceptance rate was 96%, which were further improved.

### [Example 3]

In the present Example, using a steel sheet having a sheet thickness of 12.5 mm to 13.5 mm, a sheet width of 2815 to 2830, and a tensile strength of 720 MPa to 800 MPa, a steel pipe having an API grade X 100, a pipe thickness 12.7 mm × outer diameter 914.4 mm was manufactured through the steps of a sheet width processing step, a C-press step, a U-press step using a Kaiser type U-press device, an O-press step, a welding step, and a pipe expanding step. In the manufacturing, a steel sheet as a material was processed into a sheet width of 2810 mm in the sheet width processing step, and end bending was applied in the C-press step to the steel sheet in a range of 190 mm from the end in the width direction using an upper mold having a curvature radius of 310 mm of the forming surface. In the U-press step, a Kaiser-type U-press device was used to execute the U-press step. In the U-press step, a U-press tool having a bottom R of 600 mm, a bottom R angle φ of 46 degrees, and a side r of 115 mm was used, and the U-press support initial interval was set to achieve the U-press support final interval 394 ± 40 mm, and the height of the pressing portion was set to achieve the U-press depression amount 604.8 ± 25.4 mm.

In the O-press step, a die having an O-press die radius R 451 mm was used for both the upper and lower dies, and the press was performed until the distance (O-press depression amount) between the uppermost point of the upper die and the lowermost point of the lower die became 903 ± 3 mm. Subsequently, in the pipe expanding step, the diameter of the steel pipe was expanded by setting the inner diameter to be 880 mm using a pipe expanding die having a pipe expanding die radius of 410 mm and divided into 12 in the circumferential direction. The actual pipe expansion rate at this time was in the range of 0.9% to 1.3%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 100 pieces of performance data obtained through such a manufacturing step were accumulated in the database, the out-of-roundness prediction model M was generated using the device illustrated in FIG. 10. The generated out-of-roundness prediction model M is a machine learning model having inputs including attribute information of the steel sheet, an operational parameter of the U-press step, an operational parameter of the O-press step, and an operational parameter of the pipe expanding step. The machine learning used a method of a neural network, and used one layer of an intermediate layer and five nodes for each intermediate layer. The activation function used was a ReLU function. The attribute information of the steel sheet, which is used as the input to the out-of-roundness prediction model M, was the representative sheet thickness and the yield stress of the steel sheet. The parameters used as the operational parameters of the U-press step were the U-press support final interval, and the U-press depression amount. The parameter used as the operational parameter of the O-press step was an O-press depression amount. The parameter used as the operational parameter of the pipe expanding step was the pipe expansion rate. The out-of-roundness prediction model M thus generated was installed as an online model on the system illustrated in FIG. 17. With the out-of-roundness target value set to 8 mm, and with data acquired from a host computer, specifically, representative sheet thickness and a yield stress of a steel sheet among performance data at the time of manufacturing a steel sheet in a thick sheet rolling step as a previous step as performance data of attribute information of a steel sheet to be a material, a steel pipe was manufactured with reconfigured operational conditions.

In the steel pipe out-of-roundness control method in the present Example, first, the U-press step was selected as the reconfiguration target step, and the U-press support final interval and the O-press depression amount were reconfigured as the operational conditions before execution of the U-press step, and then 100 steel pipes were manufactured. As a result, the average value of the out-of-roundness was 5.3 mm, which was improved from the past value of 8.2 mm, and the acceptance rate was also improved from 21% to 64%. Next, the reconfiguration target step was set to the U-press step, reconfiguration of the pipe expansion rate was performed in addition to the reconfiguration of the U-press support final interval and the O-press depression amount as the operational conditions before execution of the U-press step, and then 100 steel pipes were manufactured. As a result, the average value of the out-of-roundness was 4.8 mm, and the acceptance rate was 87%, which were further improved. Furthermore, with the reconfiguration target step as the U-press step, the U-press support final interval, the O-press depression amount, and the pipe expansion rate were reconfigured as operational conditions before execution of the U-press step. Together with this, the O-press step was selected as the reconfiguration target step after completion of the U-press step and before execution of the O-press step, and the O-press depression amount and the pipe expansion rate were reconfigured again to manufacture 100 steel pipes. As a result, the average value of the out-of-roundness was 4.5 mm, and the acceptance rate was 90%, which were further improved.

### [Example 4]

In the present Example, using a steel sheet having a sheet thickness of 45.0 mm to 46.0 mm, a sheet width of 1770 to 1780, and a tensile strength of 410 MPa to 530 MPa, a steel pipe having an API grade X 42, a pipe thickness 44.5 mm × outer diameter 609.6 mm was manufactured through the steps of a sheet width processing step, a C-press step, a U-press step using a Kaiser type U-press device, an O-press step, a welding step, and a pipe expanding step. In the manufacturing, a steel sheet as a material was processed into a sheet width of 1761 mm in the sheet width processing step, and end bending was applied in the C-press step to the steel sheet in a range of 140 mm from the end in the width direction using an upper mold having a curvature radius of 190 mm of the forming surface. In the U-press step, a Kaiser-type U-press device was used to execute the U-press step. In the U-press step, a U-press tool having a bottom R of 246 mm, a bottom R angle φ of 120 degrees, and a side r of 160 mm was used, and the U-press support initial interval was set to achieve the U-press support final interval 474 mm, and the height of the pressing portion was set to achieve the U-press depression amount 757.2 ± 12.7 mm.

In the O-press step, a die having an O-press die radius R of 301 mm was used for both the upper and lower dies, and the press was performed until the distance (O-press depression amount) between the uppermost point of the upper die and the lowermost point of the lower die became 602 ± 2 mm. Subsequently, in the pipe expanding step, the diameter of the steel pipe was expanded by setting the inner diameter to be 535 mm using a pipe expanding die having a pipe expanding die radius of 254 mm and divided into 10 in the circumferential direction. The actual pipe expansion rate at this time was in the range of 0.95% to 1.05%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 200 pieces of performance data obtained through such a manufacturing step were accumulated in the database, 150 pieces of training data were extracted from the database, and the out-of-roundness prediction model M was generated using the device illustrated in FIG. 10. The generated out-of-roundness prediction model M is a machine learning model having inputs including an operational parameter of the U-press step and an operational parameter of the O-press step. The method uses as the machine learning method was an ensemble model combining support vector regression and a decision tree. The kernel function used for the support vector regression was a sigmoid kernel, the maximum depth of the hierarchy of the decision tree was 3, and the maximum number of leaves in the generated decision tree was 150. The parameter used as the operational parameter of the U-press step which is an input to the out-of-roundness prediction model M was the U-press depression amount. The parameter used as the operational parameter of the O-press step was an O-press depression amount.

Regarding the out-of-roundness prediction model M generated as described above, the out-of-roundness prediction accuracy of the steel pipe after the pipe expanding step by the out-of-roundness prediction model M was verified using 50 pieces of test data accumulated in the database. As a result, the difference between the out-of-roundness predicted value output from the out-of-roundness prediction model M in response to the test data and the corresponding out-of-roundness performance value was determined as the error average of 1.8%, and the standard deviation of the error of 8.8%, leading to confirmation of capability of predicting the out-of-roundness of the steel pipe after the pipe expanding step with high accuracy by the out-of-roundness prediction model M.

### [Example 5]

In the present Example, using a steel sheet having a sheet thickness of 6.4 mm to 7.0 mm, a sheet width of 1570 to 1580, and a tensile strength of 400 MPa to 500 MPa, a steel pipe having an API grade X 42, a pipe thickness of 6.4 mm × outer diameter of 508.0 mm was manufactured through the steps of a sheet width processing step, a C-press step, a U-press step using a Kaiser type U-press device, an O-press step, a welding step, and a pipe expanding step. In the production, a steel sheet as a material was processed into a sheet width of 1564 mm in the sheet width processing step, and end bending was applied in the C-press step in a range of 130 mm from the end in the width direction using an upper mold having a curvature radius of 170 mm of the forming surface. In the U-press step, a Kaiser-type U-press device was used to execute the U-press step. In the U-press step, a U-press tool having a bottom R of 210 mm, a bottom R angle φ of 120 degrees, and a side r of 131 mm was used, and the U-press support initial interval was set to achieve the U-press support final interval of 154 ± 20 mm, and the height of the pressing portion was set to achieve the U-press depression amount 656.6 ± 12.7 mm.

In the O-press step, a die having an O-press die radius R 251 mm was used for both the upper and lower dies, and the press was performed until the distance (O-press depression amount) between the uppermost point of the upper die and the lowermost point of the lower die became 501 ± 2 mm. Subsequently, in the pipe expanding step, the diameter of the steel pipe was expanded by setting the inner diameter to be 482 mm using a pipe expanding die having a pipe expanding die radius of 226 mm and divided into 10 in the circumferential direction. The actual pipe expansion rate at this time was in the range of 0.9 to 1.0%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 200 pieces of performance data obtained through such a manufacturing step were accumulated in the database, 150 pieces of training data were extracted from the database, and the out-of-roundness prediction model M was generated using the device illustrated in FIG. 10. The generated out-of-roundness prediction model M is a machine learning model including having inputs including attribute information of the steel sheet, an operational parameter of the U-press step, and an operational parameter of the O-press step. The machine learning method used was a random forest, 10 decision trees were used, in which a maximum depth was 5 for each hierarchy, and a maximum number of leaves in a generated decision tree was 180. The attribute information of the steel sheet, which is used as the input to the out-of-roundness prediction model M, was the yield stress of the steel sheet. The parameters used as the operational parameters of the U-press step were the U-press support final interval, and the U-press depression amount. The parameter used as the operational parameter of the O-press step was an O-press depression amount.

Regarding the out-of-roundness prediction model M generated as described above, the out-of-roundness prediction accuracy of the steel pipe after the pipe expanding step by the out-of-roundness prediction model M was verified using 50 pieces of test data accumulated in the database. As a result, the difference between the out-of-roundness predicted value output from the out-of-roundness prediction model M in response to the test data and the corresponding out-of-roundness performance value was determined as the error average of 1.4%, and the standard deviation of the error of 6.0%, leading to confirmation of capability of predicting the out-of-roundness of the steel pipe after the pipe expanding step with high accuracy by the out-of-roundness prediction model M.

### [Example 6]

In the present Example, using a steel sheet having a sheet thickness of 45.0 mm to 46.0 mm, a sheet width of 2715 to 2730, and a tensile strength of 520 MPa to 630 MPa, a steel pipe having an API grade X 65, a pipe thickness of 44.5 mm × outer diameter of 914.4 mm was manufactured through the steps of a sheet width processing step, a C-press step, a U-press step using a Kaiser type U-press device, an O-press step, a welding step, and a pipe expanding step. In the production, a steel sheet as a material was processed into a sheet width of 2711 mm in the sheet width processing step, and end bending was applied in the C-press step in a range of 195 mm from the end in the width direction using an upper mold having a curvature radius of 310 mm of the forming surface. In the U-press step, a Kaiser-type U-press device was used to execute the U-press step. In the U-press step, a U-press tool having a bottom R of 362 mm, a bottom R angle φ of 120 degrees, and a side r of 178 mm was used, and the U-press support initial interval was set to achieve the U-press support final interval of 634 ± 30 mm, and the height of the pressing portion was set to achieve the U-press depression amount 782.6 ± 12.7 mm.

In the O-press step, a die having an O-press die radius R 451 mm was used for both the upper and lower dies, and the press was performed until the distance (O-press depression amount) between the uppermost point of the upper die and the lowermost point of the lower die became 903 ± 3 mm. Subsequently, in the pipe expanding step, the diameter of the steel pipe was expanded by setting the inner diameter to be 852 mm using a pipe expanding die having a pipe expanding die radius of 390 mm and divided into 12 in the circumferential direction. The actual pipe expansion rate at this time was in the range of 0.6% to 1.0%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 150 pieces of performance data obtained through such a manufacturing step were accumulated in the database, 100 pieces of training data were extracted from the database, and the out-of-roundness prediction model M was generated using the device illustrated in FIG. 10. The generated out-of-roundness prediction model M is a machine learning model having inputs including attribute information of the steel sheet, an operational parameter of the U-press step, an operational parameter of the O-press step, and an operational parameter of the pipe expanding step. The machine learning method used was Gaussian process regression, and the kernel function used included a Radial Basis Function kernel (RBF kernel) for evaluating similarity between variables and a white kernel for functionalizing the impact of noise of an objective variable. The attribute information of the steel sheet, which is used as the input to the out-of-roundness prediction model M, was the yield stress of the steel sheet. The parameters used as the operational parameters of the U-press step were the U-press support final interval, and the U-press depression amount. The parameter used as the operational parameter of the O-press step was an O-press depression amount. The parameter used as the operational parameter of the pipe expanding step was the pipe expansion rate.

Regarding the out-of-roundness prediction model M generated as described above, the out-of-roundness prediction accuracy of the steel pipe after the pipe expanding step by the out-of-roundness prediction model M was verified using 50 pieces of test data accumulated in the database. As a result, the difference between the out-of-roundness predicted value output from the out-of-roundness prediction model M in response to the test data and the corresponding out-of-roundness performance value was determined as the error average of 0.9%, and the standard deviation of the error of 3.8%, leading to confirmation of capability of predicting the out-of-roundness of the steel pipe after the pipe expanding step with high accuracy by the out-of-roundness prediction model M.

### [Example 7]

In the present Example, using a steel sheet having a sheet thickness of 44.9 mm to 45.8 mm, a sheet width of 4300 to 4310, and a tensile strength of 420 MPa to 550 MPa, a steel pipe having an API grade X 42, a pipe thickness of 44.5 mm × outer diameter of 1422.4 mm was manufactured through the steps of a sheet width processing step, a C-press step, a U-press step using a Kaiser type U-press device, an O-press step, a welding step, and a pipe expanding step. In the production, a steel sheet as a material was processed into a sheet width of 4295 mm in the sheet width processing step, and end bending was applied in the C-press step in a range of 300 mm to 330 mm from the end in the width direction using an upper mold having a curvature radius of 420 mm of the forming surface. In the U-press step, a Kaiser-type U-press device was used to execute the U-press step. In the U-press step, a U-press tool having a bottom R of 552 mm, a bottom R angle φ of 120 degrees, and a side r of 200 mm was used, and the U-press support initial interval was set to achieve the U-press support final interval of 914 ± 30 mm, and the height of the pressing portion was set to achieve the U-press depression amount 858.8 ± 12.7 mm.

In the O-press step, a die having an O-press die radius R 702 mm was used for both the upper and lower dies, and the press was performed until the distance (O-press depression amount) between the uppermost point of the upper die and the lowermost point of the lower die became 1400 ± 3 mm. Subsequently, in the pipe expanding step, the diameter of the steel pipe was expanded by setting the inner diameter to be 1330 mm using a pipe expanding die having a pipe expanding die radius of 620 mm and divided into 12 in the circumferential direction. The actual pipe expansion rate at this time was in the range of 0.8% to 1.2%. The outer diameter of the steel pipe manufactured as described above was measured at 1080 points in the circumferential direction by an out-of-roundness measurement device in the inspection step, and the difference between the maximum diameter Dmax and the minimum diameter Dmin among them was defined as the out-of-roundness. When 250 pieces of performance data obtained through such a manufacturing step were accumulated in the database, 200 pieces of training data were extracted from the database, and the out-of-roundness prediction model M was generated using the device illustrated in FIG. 10. The generated out-of-roundness prediction model M is a machine learning model having inputs including attribute information of the steel sheet, an operational parameter of the C-press step, an operational parameter of the U-press step, an operational parameter of the O-press step, and an operational parameter of the pipe expanding step. The machine learning method used was support vector regression, and the kernel function used was a sigmoid kernel. The attribute information of the steel sheet, which is used as the input to the out-of-roundness prediction model M, was the representative sheet thickness and the yield stress of the steel sheet. The parameter used as the operational parameter of the C-press step was an end bending processing width, which is a width on which the end bending processing is applied. The parameters used as the operational parameters of the U-press step were the U-press support final interval, and the U-press depression amount. The parameter used as the operational parameter of the O-press step was an O-press depression amount. The parameter used as the operational parameter of the pipe expanding step was the pipe expansion rate.

Regarding the out-of-roundness prediction model M generated as described above, the out-of-roundness prediction accuracy of the steel pipe after the pipe expanding step by the out-of-roundness prediction model M was verified using 50 pieces of test data accumulated in the database. As a result, the difference between the out-of-roundness predicted value output from the out-of-roundness prediction model M in response to the test data and the corresponding out-of-roundness performance value was determined as the error average of 0.5%, and the standard deviation of the error of 3.2%, leading to confirmation of capability of predicting the out-of-roundness of the steel pipe after the pipe expanding step with high accuracy by the out-of-roundness prediction model M.

The above has described the embodiments as application of the invention made by the present inventors, in which the present invention is not limited by the description and drawings constituting a part of the disclosure of the present invention according to the present embodiments. That is, other embodiments, implementation examples, operational techniques, and the like made by those skilled in the art based on the present embodiment are all included in the scope of the present invention.

### Industrial Applicability

According to the present invention, it is possible to provide a steel pipe out-of-roundness prediction method and a steel pipe out-of-roundness prediction device capable of accurately predicting the out-of-roundness of the steel pipe after the pipe expanding step in the UOE steel pipe manufacturing process including a plurality of steps. According to the present invention, it is also possible to provide a steel pipe out-of-roundness control method and a steel pipe manufacturing method capable of manufacturing a UOE steel pipe having satisfactory out-of-roundness. Furthermore, according to the present invention, it is possible to provide a steel pipe out-of-roundness prediction model generation method capable of generating an out-of-roundness prediction model that accurately predicts the out-of-roundness of a steel pipe after a pipe expanding step in a UOE steel pipe manufacturing process including a plurality of steps.

### Reference Signs List

- 10: C-PRESS DEVICE
- 11: CONVEYANCE MECHANISM
- 12A, 12B: PRESS MECHANISM
- 13: UPPER MOLD
- 13a: FORMING SURFACE
- 14: LOWER MOLD
- 14a: PRESSING SURFACE
- 15: TOOL HOLDER
- 16: HYDRAULIC CYLINDER
- 17: CLAMP MECHANISM
- 20: MACHINE FRAME
- 21: LIFTING CYLINDER
- 22, 37: U-PRESS TOOL (U PUNCH)
- 23: HANGING MEMBER
- 24: LOWER FLOOR SURFACE
- 25: ROD
- 26: SLIDING CYLINDER
- 27: SLIDING BLOCK
- 28: SADDLE (PEDESTAL)
- 29: LINK
- 30: PIVOT CENTER
- 31: ARM
- 32: BRAKE ROLL
- 33: SADDLE PORTION
- 34: U-BEND SUPPORT PORTION
- 35: LOWER MOLD (LOCKER DIE)
- 36: ROTATION FULCRUM
- 38: CUSHION
- 40: LOWER DIE
- 41: UPPER DIE
- 51: PIPE EXPANDING DIE
- 52: TAPERED OUTER CIRCUMFERENTIAL SURFACE
- 53: PULL ROD
- 60: ARM
- 61a, 61b: DISPLACEMENT METER
- 62: ROTATION ANGLE DETECTOR
- 63: ROTATING ARM
- 64a, 64b: PRESSING ROLLER
- 100: OUT-OF-ROUNDNESS PREDICTION MODEL GENERATION UNIT
- 100a: DATABASE
- 100b: MACHINE LEARNING UNIT
- 110: HOST COMPUTER
- 120: OPERATIONAL PARAMETER ACQUISITION UNIT
- 130: OPERATIONAL CONDITION RECONFIGURATION UNIT
- 140: STEEL PIPE OUT-OF-ROUNDNESS PREDICTION DEVICE
- 141: OPERATIONAL PARAMETER ACQUISITION UNIT
- 142: STORAGE UNIT
- 143: OUT-OF-ROUNDNESS PREDICTION UNIT
- 144: OUTPUT UNIT
- 145: INPUT UNIT
- 146: DISPLAY UNIT
- P: STEEL PIPE
- S: STEEL SHEET

## Claims

1. A steel pipe out-of-roundness prediction method, the method being a method of predicting out-of-roundness of a steel pipe after a pipe expanding step in a steel pipe manufacturing process including steps of a U-press step, an O-press step, and the pipe expanding step, the U-press step being a step of performing forming processing of a steel sheet to make the steel sheet into a formed body having a U-shaped cross section using a U-press tool, the O-press step being a step of performing forming processing of the formed body having the U-shaped cross section to form an open pipe, and the pipe expanding step being a step of performing forming processing by pipe expansion on a steel pipe obtained by joining ends of the open pipe in a width direction, the method comprising:
a step of predicting out-of-roundness information of the steel pipe after the pipe expanding step by using an out-of-roundness prediction model having been trained by machine learning, the out-of-roundness prediction model for which
an input data is data including one or more operational parameters selected from the operational parameters of the U-press step and one or more operational parameters selected from the operational parameters of the O-press step, and
an output data is out-of-roundness information of the steel pipe after the pipe expanding step.

2. The steel pipe out-of-roundness prediction method according to claim 1, wherein the out-of-roundness prediction model includes, as the input data, one or more parameters selected from attribute information of the steel sheet.

3. The steel pipe out-of-roundness prediction method according to claim 1 or 2, wherein the out-of-roundness prediction model includes, as the input data, one or more operational parameters selected from the operational parameters of the pipe expanding step.

4. The steel pipe out-of-roundness prediction method according to any one of claims 1 to 3, wherein the steel pipe manufacturing process includes a C-press step of performing forming processing of an end of the steel sheet in a width direction using end bending prior to the U-press step, and the out-of-roundness prediction model includes, as the input data, one or more operational parameters selected from operational parameters of the C-press step.

5. The steel pipe out-of-roundness prediction method according to any one of claims 1 to 4, wherein the operational parameters of the U-press step include one or more operational parameters out of shape information of the U-press tool, a U-press depression amount, a U-press support initial interval, and a U-press support final interval.

6. A steel pipe out-of-roundness control method comprising a reconfiguring step of predicting out-of-roundness information of the steel pipe after the pipe expanding step using the steel pipe out-of-roundness prediction method according to any one of claims 1 to 5, the prediction being performed before starting a reconfiguration target step which is selected from a plurality of forming processing steps constituting the steel pipe manufacturing process, and reconfiguring one or more operational parameters selected from at least operational parameters of the reconfiguration target step or one or more operational parameters selected from operational parameters of a forming processing step on a downstream side of the reconfiguration target step, based on the predicted out-of-roundness information of the steel pipe.

7. A steel pipe manufacturing method comprising a step of manufacturing a steel pipe using the steel pipe out-of-roundness control method according to claim 6.

8. A steel pipe out-of-roundness prediction model generation method, the method being a method of generating a steel pipe out-of-roundness prediction model that predicts out-of-roundness of a steel pipe after a pipe expanding step in a steel pipe manufacturing process including steps of a U-press step, an O-press step, and the pipe expanding step, the U-press step being a step of performing forming processing of a steel sheet to make the steel sheet into a formed body having a U-shaped cross section using a U-press tool, the O-press step being a step of performing forming processing of the formed body having the U-shaped cross section to form an open pipe, and the pipe expanding step being a step of performing forming processing by pipe expansion on a steel pipe obtained by joining ends of the open pipe in a width direction, the method comprising
an out-of-roundness prediction model generating step of
acquiring a plurality of pieces of training data, in which one or more pieces of operational performance data selected from the operational performance data of the U-press step and one or more pieces of operational performance data selected from the operational performance data of the O-press step are input performance data, and performance data of the out-of-roundness of the steel pipe after the pipe expanding step corresponding to the input performance data is output performance data, and
generating an out-of-roundness prediction model by machine learning using the acquired plurality of pieces of training data.

9. The steel pipe out-of-roundness prediction model generation method according to claim 8, wherein the out-of-roundness prediction model includes, as the input performance data, one or more pieces of performance data selected from attribute information of the steel sheet.

10. The steel pipe out-of-roundness prediction model generation method according to claim 8 or 9, wherein the machine learning to be used is a type of machine learning selected from a neural network, decision tree learning, random forest, Gaussian process regression, and support vector regression.

11. A steel pipe out-of-roundness prediction device, the device being a device of predicting a steel pipe out-of-roundness after a pipe expanding step in a steel pipe manufacturing process including a U-press step, an O-press step, and the pipe expanding step, the U-press step being a step of processing a steel sheet into a formed body having a U-shaped cross section using a U-press tool, the O-press step being a step of processing the formed body having the U-shaped cross section into an open pipe, and the pipe expanding step being a step of performing forming processing by pipe expansion on a steel pipe obtained by joining ends of the open pipe in a width direction,
the steel pipe out-of-roundness prediction device comprising:
an operational parameter acquisition unit that acquires one or more operational parameters selected from the operational parameters of the U-press step and one or more operational parameters selected from the operational parameters of the O-press step; and
an out-of-roundness prediction unit that predicts out-of-roundness information of the steel pipe after the pipe expanding step by inputting the operational parameter acquired by the operational parameter acquisition unit to an out-of-roundness prediction model having been trained by machine learning, the out-of-roundness prediction model for which
an input data is data including one or more operational parameters selected from the operational parameters of the U-press step and one or more operational parameters selected from the operational parameters of the O-press step, and
an output data is out-of-roundness information of the steel pipe after the pipe expanding step.

12. The steel pipe out-of-roundness prediction device according to claim 11, further comprising a terminal device including
an input unit that acquires input information based on a user's operation, and
a display unit that displays the out-of-roundness information,
wherein the operational parameter acquisition unit updates a part or all of the acquired operational parameters based on the input information acquired by the input unit, and
the display unit displays the out-of-roundness information of the steel pipe which is predicted by the out-of-roundness prediction unit by using the updated operational parameters.
